(19) Europäisches Patentamt
European Patent Office
Office européen des brevets

(11) **EP 4 503 483 A1**

(12) **EUROPEAN PATENT APPLICATION**
published in accordance with Art. 153(4) EPC

(43) Date of publication:
**05.02.2025 Bulletin 2025/06**

(21) Application number: **22933706.8**

(22) Date of filing: **28.12.2022**

(51) International Patent Classification (IPC):
**H04J 13/10** (2011.01)   **H04L 27/26** (2006.01)
**H04W 72/02** (2009.01)   **H04W 72/0453** (2023.01)

(52) Cooperative Patent Classification (CPC):
**H04J 13/10; H04L 27/26; H04W 72/02;
H04W 72/0453**

(86) International application number:
**PCT/JP2022/048548**

(87) International publication number:
**WO 2023/181579 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.03.2022 JP 2022049014**

(71) Applicant: **Panasonic Intellectual Property
Corporation
of America
Torrance, CA 90504 (US)**

(72) Inventors:
• **YAMAMOTO, Tetsuya**
  **Kadoma-shi, Osaka 571-0057 (JP)**
• **SUZUKI, Hidetoshi**
  **Kadoma-shi, Osaka 571-0057 (JP)**
• **SHARIATMADARI, Hamidreza**
  **63225 Langen (DE)**
• **TRAN, Xuan Tuong**
  **Singapore 469332 (SG)**

(74) Representative: **Grünecker Patent- und
Rechtsanwälte
PartG mbB
Leopoldstraße 4
80802 München (DE)**

(54) **TERMINAL, BASE STATION, AND COMMUNICATION METHOD**

(57)   This terminal comprises: a control circuit that determines one combination from among a plurality of sequence and frequency resource combinations in accordance with an information bit value in an uplink transmission not using a reference signal; and a transmission circuit that uses the frequency resource included in the one combination to transmit the sequence included in the one combination.

200

FIG. 6

# Description

## Technical Field

The present disclosure relates to a terminal, a base station, and a communication method.

## Background Art

In recent years, a dramatic growth of Internet of Things (IoT) has been expected with the expansion and diversification of radio services as a background. The usage of mobile communication is expanding to all fields such as automobiles, houses, home electric appliances, or industrial equipment in addition to information terminals such as smartphones. In order to support the diversification of services, a substantial improvement in the performance and function of mobile communication systems has been required for various requirements such as an increase in the number of connected devices or low latency in addition to an increase in system capacity. The 5th generation mobile communication systems (5G) has features such as enhanced mobile broadband (eMBB), massive machine type communication (mMTC), and ultra reliable and low latency communication (URLLC), and can flexibly provide radio communication in response to a wide variety of needs.

The 3rd Generation Partnership Project (3GPP) as an international standardizing body has been specifying New Radio (NR) as one of 5G radio interfaces.

## Citation List

### Patent Literature

NPL 1
3GPP TS38.104 V15.16.0, "NR Base Station (BS) radio transmission and reception (Release 15)," December 2021.
NPL 2
RP-202928, "New WID on NR coverage enhancements," China Telecom, December 2020.
NPL 3
3GPP TS38.211 V16.8.0, "NR Physical channels and modulation (Release 16)," December 2021.
NPL 4
3GPP TS38.212 V16.8.0, "NR Multiplexing and channel coding (Release 16)," December 2021.
NPL 5
3GPP TS38.213 V16.8.0, "NR Physical layer procedures for control (Release 16)," December 2021.
NPL 6
3GPP TS38.214 V16.8.0, "NR Physical layer procedures for data (Release 16)," December 2021.
NPL 7
R1-2007584, "Potential solutions for PUCCH coverage enhancement," Huawei, HiSilicon, October 26th - November 13th, 2020.
NPL 8
R1-2009315, "Potential coverage enhancement techniques for PUCCH," Qualcomm Incorporated, Huawei, HiSilicon, October 26th - November 13th, 2020.

## Summary of Invention

There is room for consideration on a method for improving the reception performance of a signal in the uplink, however.

One non-limiting and exemplary embodiment facilitates providing a terminal, a base station, and a communication method each capable of improving the reception performance of a signal in the uplink.

A terminal according to an exemplary embodiment of the present disclosure includes: control circuitry, which, in operation, determines one combination from a plurality of combinations, each of which is a combination of a sequence and a frequency resource, according to a value of an information bit in an uplink transmission without using a reference signal; and transmission circuitry, which, in operation, transmits the sequence included in the one combination by using the frequency resource included in the one combination, in the uplink transmission without using the reference signal.

It should be noted that general or specific embodiments may be implemented as a system, a method, an integrated circuit, a computer program, a storage medium, or any selective combination thereof.

According to an exemplary embodiment of the present disclosure, it is possible to improve the reception performance of a signal in the uplink.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

## Brief Description of Drawings

FIG. 1 illustrates an exemplary feature of a Physical Uplink Control Channel (PUCCH) format;

FIG. 2 illustrates an exemplary PUCCH transmission;

FIG. 3 illustrates an exemplary PUCCH transmission;

FIG. 4 illustrates examples of the number of orthogonal sequences and the non-orthogonal sequences used for PUCCH transmission;

FIG. 5 is a block diagram illustrating an exemplary configuration focused on part of a base station;

FIG. 6 is a block diagram illustrating an exemplary configuration focused on part of a terminal;

FIG. 7 is a block diagram illustrating an exemplary configuration of the base station;

FIG. 8 is a block diagram illustrating an exemplary configuration of the terminal;

FIG. 9 is a flowchart describing an exemplary operation of the terminal;

FIG. 10 illustrates an exemplary PUCCH transmission;

FIG. 11 illustrates exemplary sequences used for PUCCH transmission;

FIG. 12 illustrates an exemplary PUCCH transmission;

FIG. 13 illustrates exemplary sequences used for PUCCH transmission;

FIG. 14 illustrates examples of the number of sequences and the number of frequency resources used for PUCCH transmission;

FIG. 15 illustrates an exemplary architecture for a 3GPP NR system;

FIG. 16 schematically illustrates a functional split between NG-RAN and 5GC;

FIG. 17 is a sequence diagram of a radio resource control (RRC) connection setup/reconfiguration procedure;

FIG. 18 schematically illustrates usage scenarios of enhanced Mobile BroadBand (eMBB), massive Machine Type Communications (mMTC), and Ultra Reliable and Low Latency Communications (URLLC); and

FIG. 19 is a block diagram illustrating an exemplary 5G system architecture for a non-roaming scenario.

Description of Embodiments

Hereinafter, embodiments of the present disclosure will be described in detail with reference to the accompanying drawings.
In NR, for example, in addition to a frequency band of 6 GHz or less, mainly within 700 MHz to 3.5 GHz band (for example, may be referred to as Frequency Range 1 (FR1)), which has been used for cellular communication, a millimeter-wave band such as 28 GHz or 39 GHz band capable of ensuring a wide band (for example, may be referred to as FR2) can be utilized (for example, see NPL 1). Further, for example, in FR1, a high frequency band is possibly used compared with the frequency band used in Long Term Evolution (LTE) or 3rd Generation mobile communication systems (3G) such as 3.5 GHz band.
The higher the frequency band is, the greater a radio wave propagation loss is, and thus, the received quality of radio waves is likely to deteriorate. Hence, in NR, for example, it is expected to ensure almost the same communication area (or coverage) as in the Radio Access Technology (RAT) such LTE or 3G, in other words, to ensure an appropriate communication quality when the high frequency band is used compared with LTE or 3G. In one example, in 3GPP Release 17 (e.g., referred to as "Rel. 17"), a method of improving the coverage in NR has been studied (e.g., see NPL 2).
In NR, a terminal (for example, also referred to as user equipment (UE)) transmits/receives data in accordance with, for example, resource allocation indicated by a Layer 1 control signal (for example, Downlink Control Information (DCI)) on a downlink control channel (for example, Physical Downlink Control Channel (PDCCH)) from a base station (for example, also referred to as gNB) or Radio Resource Control (RRC) that is Layer 3 (for example, see NPLs 3 to 7).
The terminal feeds back, for example, a response signal (for example, Acknowledgement/Negative Acknowledgement (ACK/NACK) or Hybrid Automatic Repeat ReQuest-ACK (HARQ-ACK)) indicating success or failure in decoding on a downlink data channel (for example, Physical Downlink Control Channel (PDSCH)), by using an uplink control channel (for example, Physical Uplink Control Channel (PUCCH)) (see, for example, NPL 5).
Further, the terminal may use a PUCCH to transmit, in addition to (or instead of) ACK/NACK, a scheduling request (SR) that requests radio resource allocation for uplink and channel state information (CSI) for downlink to the base station. The information transmitted with a PUCCH, such as an ACK/NACK, an SR, and CSI, is also referred to as uplink control information (for example, Uplink Control Information (UCI)).
For example, in a case where the terminal transmits an ACK/NACK for a PDSCH assigned by DCI, the terminal may transmit a PUCCH in accordance with resource allocation indicated by DCI from the base station. For example, the control information included in DCI may include information on a PUCCH resource or information on a timing, e.g. how many slots later a PUCCH is transmitted since the slot in which a PDSCH has been received (for example, K1 or PDSCH-to-PDSCH_feedback timing indication). Further, the control information included in DCI may include information on, for example, the number of ACK/NACK bits (e.g., Downlink Assignment Index (DAI)).

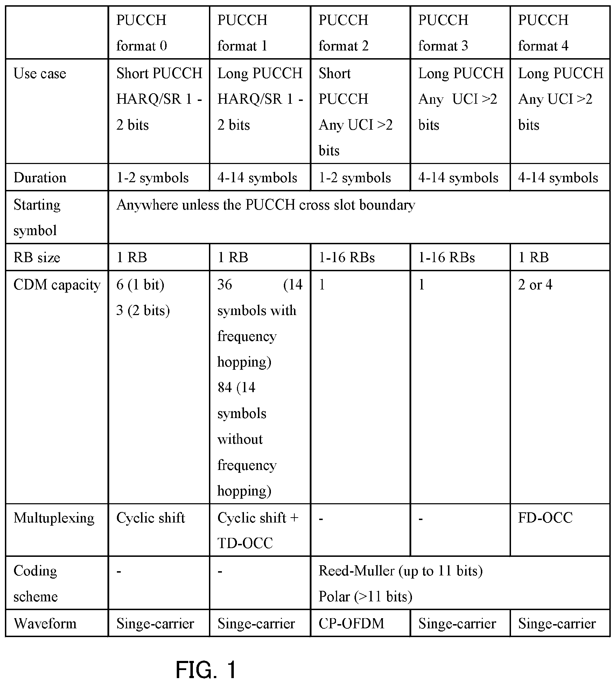

In NR, five PUCCH formats (e.g., PUCCH format 0 to 4) are defined (e.g., see NPL 3). FIG. 1 illustrates exemplary features of PUCCH formats 0 to 4.

As illustrated in FIG. 1, PUCCH format 0 is configured with 1 or 2 symbols, and the terminal is capable of transmitting UCI of up to 2 bits. PUCCH format 1 is configured with 4 to 14 symbols, and the terminal is capable of transmitting UCI of up to 2 bits. PUCCH format 2 is configured with 1 or 2 symbols, and the terminal is capable of transmitting UCI larger than 2 bits. PUCCH format 3 is configured with 4 to 14 symbols, and is capable of transmitting UCI larger than 2 bits. PUCCH format 4 is configured with 4 to 14 symbols, the terminal is capable of transmitting UCI larger than 2 bits, and further, it is possible to multiplex a plurality of terminals in the same time- and frequency resource (for example, a resource block (RB)) by using an orthogonal cover code (OCC).

For example, PUCCH formats 1, 2, 3, and 4 are each configured such that a reference signal (for example, a Demodulation Reference Signal (DMRS)) used in channel estimation for demodulation is placed in a PUCCH resource (for example, see NPL 3).

On the other hand, PUCCH format 0 may not use a DMRS (for example, does not require a DMRS). For example, in a case where PUCCH format 0 is used, the transmission side (for example, the terminal) maps cyclic shift sequences (for example, with a sequence length of 12) different from each other to one Orthogonal Frequency Division Multiplexing (OFDM) symbol and one resource block (for example, 12 subcarriers) according to information bits, and transmits the cyclic shift sequences. The reception side (for example, the base station) demodulates information bits by using the cyclic shift sequences, with a correlation processing-based maximum likelihood detection.

Here, a method for transmitting a PUCCH without using a DMRS (for example, also referred to as DMRS-less PUCCH) has been reported to be a technology capable of improving transmission quality and effective for coverage enhancement as compared with a PUCCH transmission method that uses a DMRS (see, for example, NPL 7 or 8). For this reason, for example, a transmission of UCI larger than 2 bits, which is supported in an existing PUCCH format using a DMRS, is considered to be supported in a PUCCH transmission method without using a DMRS.

Hereinafter, examples of a PUCCH transmission method without using a DMRS will be described.

<Method 1>

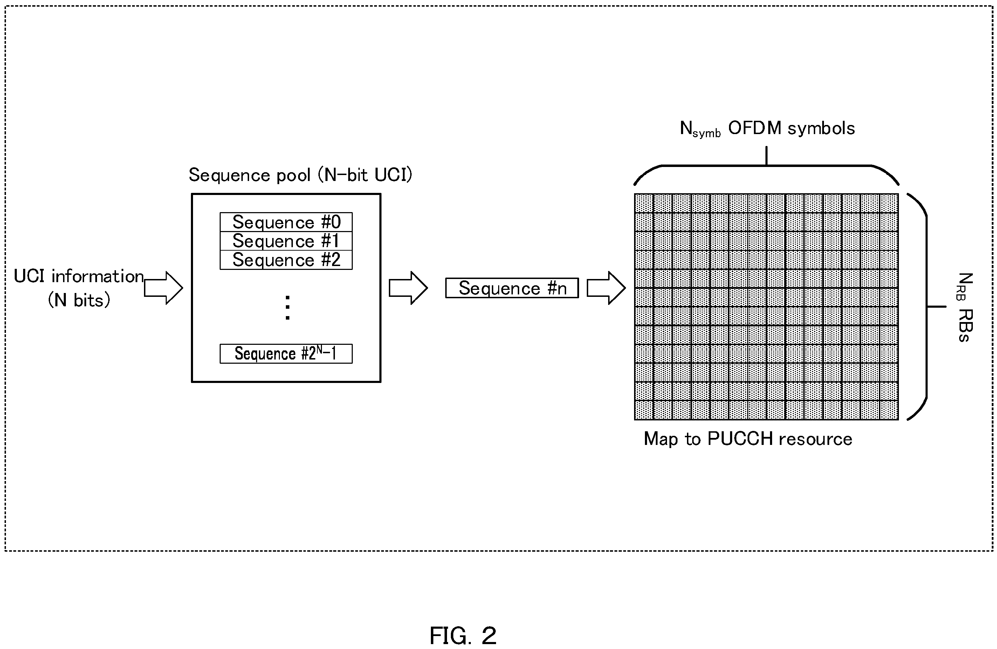

FIG. 2 illustrates a concept of a PUCCH transmission method in Method 1.

For example, NPL 7 discloses that sequence selection is applied as a PUCCH transmission method without using a DMRS, in which N-bit UCI is transmitted. For example, as illustrated in FIG. 2, a sequence pool including $2^N$ sequences each of which is associated with each value of N-bit UCI is prepared for the N-bit UCI. The terminal selects one sequence (for example, sequence #n) from the $2^N$ sequences, for example, according to the UCI bit value, and maps the selected sequence to a PUCCH resource and transmits the selected sequence. The PUCCH resource may be configured with, for example, Nsymb OFDM symbols and NRB resource blocks.

Hereinafter, this method will be referred to as "Method 1."

In Method 1, the operation of selecting one sequence with sequence length M from N-bit UCI, where the sequence length of the sequence is M, can be regarded as a kind of precoding, for example. For example, the method described in NPL 7 or another method may be applied to the method for selecting one sequence with sequence length M from N-bit UCI.

Further, in a case where the number of resource elements (REs) included in a PUCCH resource is larger than sequence length M, the terminal may repeat a sequence (for example, by repetition) and map the sequence to the PUCCH resource, or may extend a sequence (for example, by extension) and map the sequence to the PUCCH resource.

<Method 2>

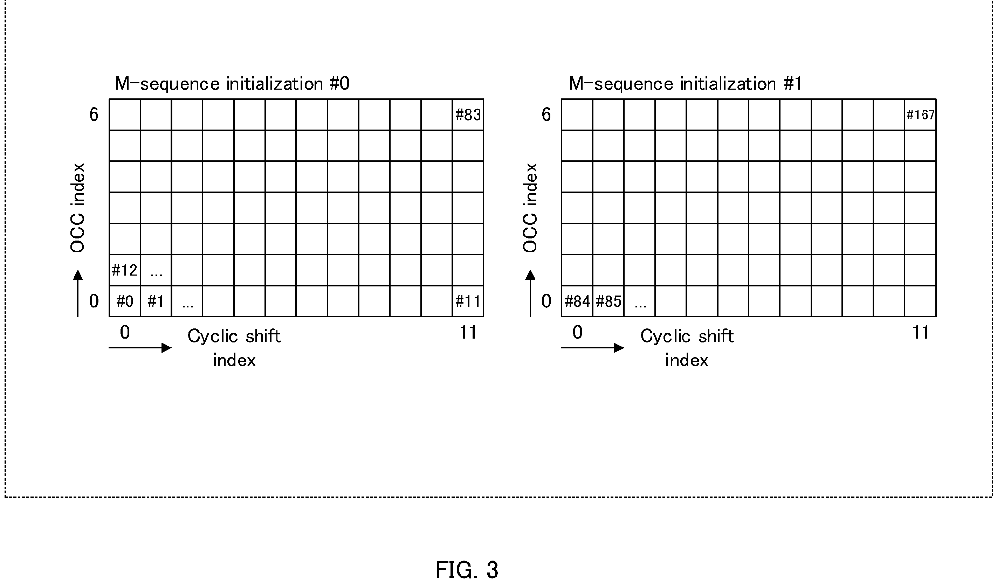

FIG. 3 illustrates a concept of a PUCCH transmission method in Method 2.

For example, in the same manner as in Method 1, NPL 8 discloses that sequence selection is applied as a PUCCH transmission method without using a DMRS, in which N-bit UCI is transmitted. For example, in the same manner as in Method 1, a sequence pool including $2^N$ sequences each of which is associated with each value of N-bit UCI is prepared for the N-bit UCI. The terminal selects one sequence from the $2^N$ sequences, for example, according to the UCI bit value, and maps the selected sequence to a PUCCH resource and transmits the selected sequence.

Further, NPL 8 discloses the use of a combination of an orthogonal sequence(s) and a non-orthogonal sequence(s) to generate a sequence included in a sequence pool.

For example, first, orthogonal sequences consisting of NO = Nsubcarrier $\times$ Nsymb sequences are prepared. Here, Nsubcarrier indicates the number of subcarriers per one symbol assigned to a PUCCH resource, and Nsymb indicates the number of symbols assigned to the PUCCH resource. For example, it is possible to generate Nsubcarrier cyclic shift sequences for sequences with sequence length Nsubcarrier. Further, by performing code spreading with an orthogonal cover code (OCC) according to number $N_{symb}$ of

symbols, $N_O = N_{subcarrier} \times N_{symb}$ orthogonal sequences can be generated.

For example, in a case where number $N_O$ of orthogonal sequences is smaller than $2^N$, an orthogonal sequence(s) and a non-orthogonal sequence(s) may be combined such that $N_O \times N_{NO} \geq 2^N$ sequences are generated. For example, the method described in NPL 8 (e.g., a method for generating a plurality of non-orthogonal sequences by varying the initial values of M sequences) or another method may be applied to the method for generating a non-orthogonal sequence.

Hereinafter, this method will be referred to as "Method 2."

FIG. 3 illustrates sequences (for example, sequence numbers #0 to #167) that can be generated in the case of $N_{subcarrier} = 12$, $N_{symb} = 7$, and $N_{NO} = 2$ as an example.

Methods 1 and 2 of PUCCH transmission have been described above.

In Methods 1 and 2 described above, a sequence pool including $2^N$ sequences is prepared for N-bit UCI, and the terminal selects one sequence from the $2^N$ sequences according to the UCI bit value and transmits the selected sequence.

For example, in Method 2, the sequences prepared as a sequence pool may be generated by combining an orthogonal sequence(s) and a non-orthogonal sequence(s).

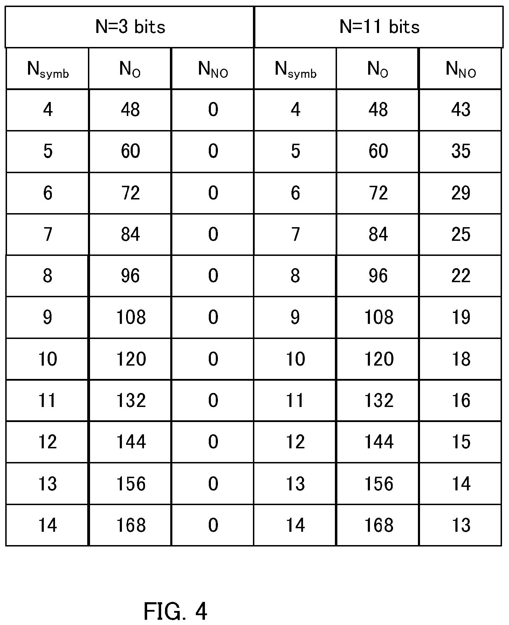

Here, the orthogonal sequences may depend on, for example, the number of PUCCH resources allocated to the terminal. FIG. 4 illustrates, as an example, the number of orthogonal sequences that can be generated in a case where $N_{symb}$ symbols and one resource block (for example, 12 subcarriers) are assigned and allocated as a PUCCH resource, and the number of non-orthogonal sequences included in a sequence pool in a case where UCI of N = 3 bits and UCI of N = 11 bits are transmitted.

In the case of N = 3 bits, the number of values that may be taken as the UCI bit value is eight ($2^N = 2^3 = 8$), and thus, a sequence pool including $2^3 = 8$ sequences is prepared. For this reason, as illustrated in FIG. 4, in the case of N = 3 bits, a sequence pool including eight sequences can be constituted with any one of $12N_{symb}$ orthogonal sequences that can be generated regardless of number $N_{symb}$ of symbols, and number $N_{NO}$ of non-orthogonal sequences may be 0.

In a case where N = 11 bits, on the other hand, the number of values that may be taken as the UCI bit value is 2048 ($2^N = 2^{11} = 2048$), and thus, a sequence pool including $2^{11} = 2048$ sequences is prepared. For this reason, as illustrated in FIG. 4, in the case of N = 11, no sequence pool can be constituted with $12N_{symb}$ orthogonal sequences, and thus, a sequence pool is constituted by combining an orthogonal sequence(s) and a non-orthogonal sequence(s).

For example, when a non-orthogonal sequence is used, the correlation detection accuracy on the reception side (for example, the base station) is likely to deteriorate and the PUCCH transmission quality may deteriorate, compared to when an orthogonal sequence is used for sequence selection instead of using a non-orthogonal sequence.

For example, as described above, an existing PUCCH format in NR allows resource allocation of up to 16 resource blocks. For example, by increasing number $N_{RB}$ of resource blocks, it is possible to generate $N_{subcarrier} \times N_{RB}$ cyclic shift sequences for a sequence having a sequence length of $N_{subcarrier} \times N_{RB}$, and thus, it is possible to increase orthogonal sequences.

For example, in a case where the number of resource blocks is increased, the power spectrum density (PSD) of the transmission signal per unit bandwidth decreases when the transmission bandwidth is increased and PUCCH is transmitted. Since a reduction in PSD may lead to a degradation in coverage performance, such PUCCH transmission is unlikely to be applied in an environment where coverage enhancement is expected.

In a non-limiting and exemplary embodiment of the present disclosure, a method for improving the reception performance of a signal in an uplink transmission (for example, a PUCCH transmission or a UCI transmission) without using a DMRS will be described.

For example, in a method of transmitting information bits (for example, UCI bits) by sequence selection without using a DMRS (for example, DMRS-less PUCCH), frequency resource selection may be applied to prevent an increase in the transmission bandwidth and to increase orthogonal resources. Thus, it is possible to prevent a decrease in coverage performance, for example, and further improve the PUCCH transmission quality.

Hereinafter, non-limiting embodiments of the present disclosure will be described.

[Overview of Communication System]

A communication system according to each embodiment of the present disclosure includes, for example, at least one base station and at least one terminal.

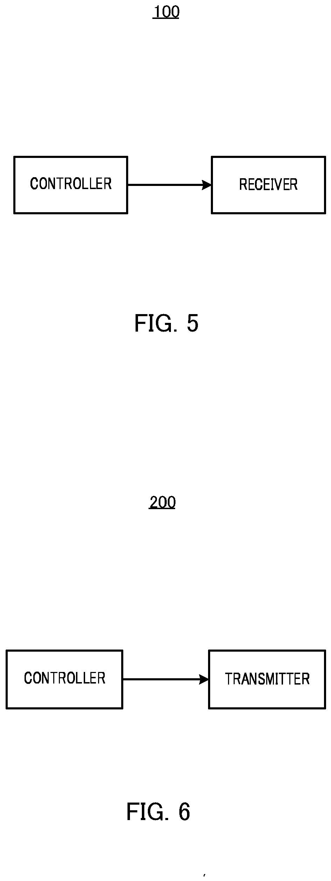

FIG. 5 is a block diagram illustrating an exemplary configuration focused on part of base station 100 according to an example of the present disclosure, and FIG. 6 is a block diagram illustrating an exemplary configuration focused on part of terminal 200 according to an example of the present disclosure.

In base station 100 illustrated in FIG. 5, a receiver (for example, corresponding to reception circuitry) receives a signal. A controller (corresponding to, for example, control circuitry) identifies, based on an association of the value of an information bit(s) (for example, UCI bit(s)) with a combination of a sequence and a frequency resource in an uplink transmission without using a reference signal (for example, a DMRS), the value of the information bit(s) corresponding to a sequence included in the signal and a frequency resource used for the signal.

In terminal 200 illustrated in FIG. 6, a controller (corresponding to, for example, control circuitry) determines one combination from a plurality of combinations, each of which is a combination of a sequence and a frequency resource, according to the value of an information bit(s) (for example, a UCI bit(s)) in an uplink transmission without using a reference signal (for example, a DMRS). A transmitter (corresponding to, for example, transmission circuitry) transmits the sequence included in the one combination by using the frequency resource included in the one combination, in the uplink transmission without using the reference signal.

(Embodiment 1)

[Configuration of Base Station]

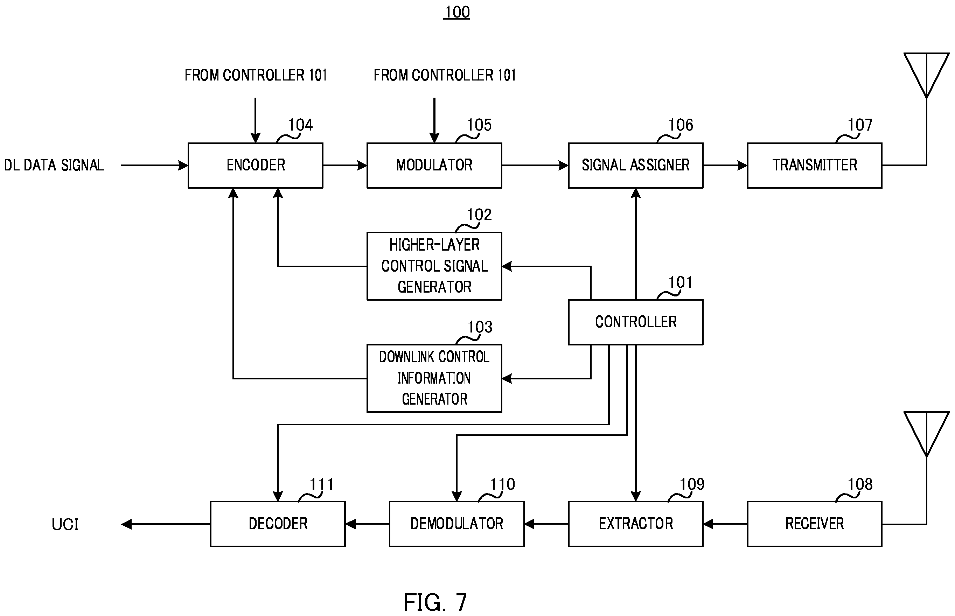

FIG. 7 is a block diagram illustrating an exemplary configuration of base station 100 according to Embodiment 1. In FIG. 7, base station 100 includes controller 101, higher-layer control signal generator 102, downlink control information generator 103, encoder 104, modulator 105, signal assigner 106, transmitter 107, receiver 108, extractor 109, demodulator 110, and decoder 111.

Note that, at least one of controller 101, higher-layer control signal generator 102, downlink control information generator 103, encoder 104, modulator 105, signal assigner 106, extractor 109, demodulator 110, and decoder 111 which are illustrated in FIG. 7 may be included in the controller illustrated in FIG. 5. Further, receiver 108 illustrated in FIG. 7 may be included in the receiver illustrated in FIG. 5.

Controller 101 determines, for example, at least one of information on a PUCCH transmission method and information on a PUCCH resource, and outputs the determined information to at least one of higher-layer control signal generator 102 and downlink control information generator 103. The information on the PUCCH transmission method may include, for example, information on a PUCCH format and information on whether to apply a PUCCH transmission method without using a DMRS. Further, the information on the PUCCH resource may include, for example, information on a PUCCH resource set and the number of Repetitions.

Further, controller 101 determines, for example, information on a downlink signal for transmitting a downlink data signal, a higher-layer control signal, or downlink control information (e.g., Modulation and Coding Scheme (MCS) and radio resource allocation), and outputs the determined information to encoder 104, modulator 105, and signal assigner 106. Further, controller 101 outputs information on a downlink signal (for example, a data signal or a higher-layer control signal) to downlink control information generator 103, for example.

Further, controller 101 determines, for example, information (e.g., PUCCH resource) on the transmission of an uplink control signal (e.g., PUCCH) in terminal 200.

Controller 101 outputs the determined information on the uplink control signal to at least one of higher-layer control signal generator 102 and downlink control information generator 103, for example. Further, controller 101 determines, for example, information on a PUCCH resource, and a sequence pool and a candidate for a combination of a sequence and a frequency resource, which are used for PUCCH (for example, UCI) transmission, and outputs the determined information to extractor 109, demodulator 110, and decoder 111.

Higher-layer control signal generator 102 generates a higher-layer control signal bit string, for example, based on the information inputted from controller 101, and outputs the higher-layer control signal bit string to encoder 104.

Downlink control information generator 103 generates a downlink control information (for example, DCI) bit string, for example, based on the information inputted from controller 101, and outputs the generated DCI bit string to encoder 104. Downlink control information generator 103 may include, for example, the information on the PUCCH resource inputted from controller 101 in a PUCCH Resource Indicator (PRI) field in the DCI bit string. Note that, the control information may be transmitted to a plurality of terminals.

Encoder 104 encodes downlink data (e.g., a DL data signal), the bit string inputted from higher-layer control signal generator 102, or the DCI bit string inputted from downlink control information generator 103, for example, based on the information inputted from controller 101. Encoder 104 outputs the encoded bit string to modulator 105.

Modulator 105 modulates encoded bit string inputted from encoder 104, for example, based on the information inputted from controller 101, and outputs the modulated signal (for example, a symbol string) to signal assigner 106.

Signal assigner 106 maps, for example, based on the information inputted from controller 101 and indicating the radio resource, the symbol string (including, for example, a downlink data signal or a control signal) inputted from modulator 105 to the radio resource. Signal assigner 106 outputs a signal that has been mapped to a downlink to transmitter 107.

Transmitter 107 performs, for example, transmission waveform generation processing such as orthogonal frequency division multiplexing (OFDM), on a signal inputted, for example, from signal assigner 106. Further, for example, in the case of an OFDM transmission in which a cyclic prefix (CP) is added, transmitter 107 performs Inverse Fast Fourier Transform (IFFT) processing on the signal, and adds a CP to the signal after the IFFT. Further, transmitter 107 performs, for example, RF processing such as D/A conversion or up-conversion on the signal, and transmits a radio signal to terminal 200 via an antenna.

Receiver 108 performs RF processing such as down-conversion or A/D conversion on the uplink signal received from terminal 200 through, for example, an antenna. Further, in the case of an OFDM transmission, receiver 108 performs Fast Fourier Transform (FFT) processing on the received signal, for example, and outputs the obtained frequency domain signal to extractor 109.

Extractor 109 extracts, for example, based on the information inputted from controller 101, a radio resource portion from the received signal inputted from receiver 108, in which the uplink control signal (for example, PUCCH) is transmitted, and outputs the extracted radio resource portion to demodulator 110.

Demodulator 110 demodulates the uplink control signal (for example, PUCCH) inputted from extractor 109, for example, based on the information inputted from controller 101. For example, demodulator 110 may identify a combination of a sequence, which is transmitted in the PUCCH, and a frequency resource, which is used for PUCCH transmission. Demodulator 110 outputs, for example, the demodulation result to decoder 111.

Decoder 111 performs, for example, based on the information inputted from controller 101 and the demodulation result inputted from demodulator 110, error correction decoding of the uplink control signal (e.g., PUCCH) and obtains a decoded reception bit sequence (for example, UCI bit string). For example, decoder 111 may identify the reception UCI bit string based on the combination of the sequence and the frequency resource identified in demodulator 110.

[Configuration of Terminal]

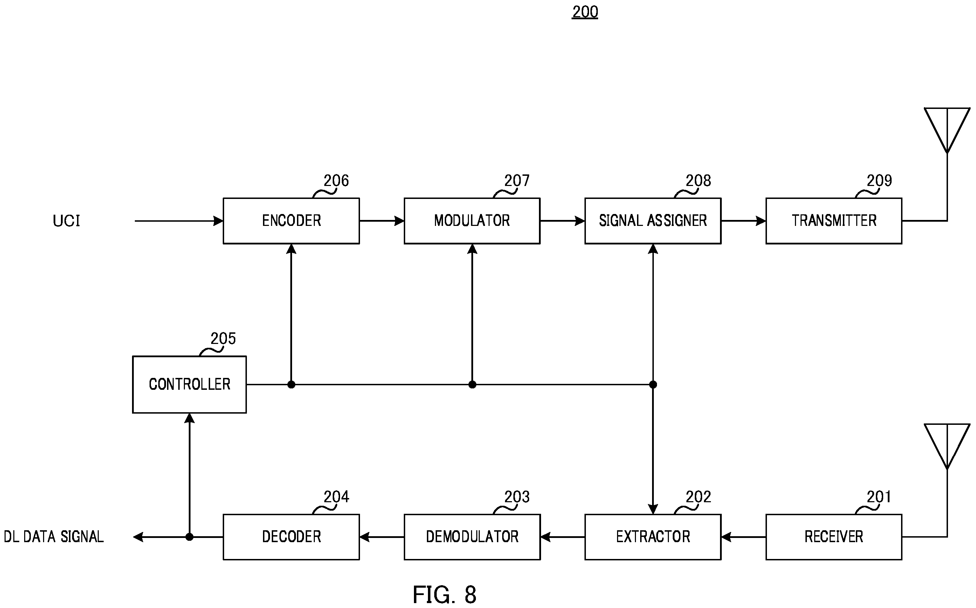

FIG. 8 is a block diagram illustrating an exemplary configuration of terminal 200 according to an exemplary embodiment of the present disclosure. For example, in FIG. 8, terminal 200 includes receiver 201, extractor 202, demodulator 203, decoder 204, controller 205, encoder 206, modulator 207, signal assigner 208, and transmitter 209.

Note that, at least one of extractor 202, demodulator 203, decoder 204, controller 205, encoder 206, modulator 207, and signal assigner 208 which are illustrated in FIG. 8 may be included in the controller illustrated in FIG. 6. Further, transmitter 209 illustrated in FIG. 8 may be included in the transmitter illustrated in FIG. 6.

Receiver 201 receives a downlink signal (for example, a downlink data signal or downlink control information) from base station 100 via an antenna, performs RF processing such as down-conversion or A/D conversion on the received radio signal, and obtains a received signal (baseband signal). Further, when receiver 201 receives an OFDM signal, receiver 201 performs FFT processing on the received signal and converts the received signal into that in the frequency domain. Receiver 201 outputs the received signal to extractor 202.

Extractor 202 extracts, for example, based on information on a radio resource in downlink control information, which is inputted from controller 205, a radio resource portion, which may include downlink control information, from the received signal inputted from receiver 201, and outputs the radio resource portion to demodulator 203. Further, extractor 202 extracts, based on information on a radio resource in a data signal, which is inputted from controller 205, a radio resource portion including downlink data, and outputs the radio resource portion to demodulator 203.

Demodulator 203 demodulates, for example, based on information inputted from controller 205, a signal inputted (for example, PDCCH or PDSCH) from extractor 202, and outputs the demodulation result to decoder 204.

Decoder 204 performs, for example, based on information inputted from controller 205, error correction decoding of the PDCCH or PDSCH by using the demodulation result inputted from demodulator 203, and obtains, for example, downlink reception data, a higher-layer control signal, or downlink control information. Decoder 204 outputs the higher-layer control signal and the downlink control information to controller 205, and outputs the downlink reception data. Further, decoder 204 may generate a response signal (for example, ACK/NACK) based on the decoding result of the downlink reception data.

Controller 205 determines, for example, a PUCCH resource based on a signal inputted from decoder 204 (for example, a higher-layer control signal or downlink control information). The higher-layer control signal may include information on a PUCCH transmission method and information on a PUCCH resource, for example. Further, the downlink control information may include information on a PUCCH resource in a PRI field, for example. Further, controller 205 may determine information on a sequence pool used for the transmission of a PUCCH without using a DMRS, and a combination of a sequence and a frequency resource, for example. Controller 205 outputs the determined information to, for example, encoder 206, modulator 207, and signal assigner 208.

Encoder 206 encodes UCI, for example, based on the information inputted from controller 205. Encoder 206 outputs the encoded bit string to modulator 207. Note that, the encoding may not be applied to UCI depending on the PUCCH format.

Modulator 207 modulates, for example, based on the information inputted from controller 205, the encoded bit string inputted from encoder 206, and outputs the modulated signal (symbol string) to signal assigner 208. For example, modulator 207 may select a combination of a sequence and a frequency resource to be used for PUCCH (UCI) transmission from the encoded bit string, and may output the selected sequence to signal assigner 208.

Signal assigner 208 maps a signal (for example, a sequence) inputted from modulator 207 to a radio resource (for example, a selected frequency resource), for example, based on the information inputted from controller 205. Signal assigner 208 outputs, for example, an uplink signal in which the signal is mapped, to transmitter 209.

Transmitter 209 generates a transmission signal waveform, such as OFDM, for the signal inputted from signal assigner 208. Further, in the case of an OFDM transmission using a CP, for example, transmitter 209 performs IFFT processing on the signal and adds a CP to the signal after the IFFT. Alternatively, in a case where transmitter 209 generates a single carrier waveform, a Discrete Fourier Transformer (DFT) may be added to a rear stage of modulator 207 or to a front stage of signal assigner 208, for example (not illustrated). Further, transmitter 209 performs, for example, RF processing such as D/A conversion and up-conversion on the transmission signal, and transmits the radio signal to base station 100 via an antenna.

[Operation Examples of Base Station 100 and Terminal 200]

Descriptions will be given of operation examples of base station 100 and terminal 200 that have the above configurations.

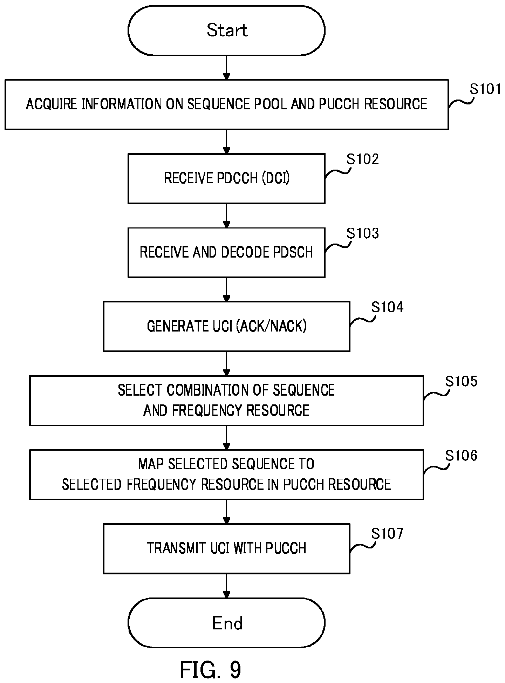

FIG. 9 is a flowchart describing an exemplary operation of terminal 200.

As illustrated in FIG. 9, terminal 200 acquires, for example, information on a sequence pool to be used for PUCCH (UCI) transmission and information on a PUCCH resource (S101).

The information on the sequence pool may be configured (or indicated) to terminal 200 by higher-layer signaling (for example, a Radio Resource Control (RRC) parameter) from base station 100, for example. Further, the information on the PUCCH resource may be configured, for example, by higher-layer signaling, such as RRC, from base station 100 to terminal 200, or may be configured by information included in DCI.

Terminal 200 receives a PDCCH (for example, including DCI) (S102).

Terminal 200 receives and decodes a PDSCH assigned by the DCI included in the received PDCCH, for example (S103).

Terminal 200 generates an ACK/NACK, for example, based on the reception success/failure (or decoding success/failure) of the PDSCH (S104).

Terminal 200 selects a combination of a sequence and a frequency resource) corresponding to the value of the generated ACK/NACK (e.g., the UCI bit value) from the sequence pool and the PUCCH resource, for example (S105).

Terminal 200, for example, maps the selected sequence to the selected frequency resource (S106), and transmits the UCI with a PUCCH (S107).

Note that, FIG. 9 illustrates an example in which an ACK/NACK is transmitted by UCI, but is not limited to this. For example, when an SR or CSI is transmitted by UCI, the reception of PDCCH (S102) and the reception and decoding of PDSCH (S103) at terminal 200 may be omitted.

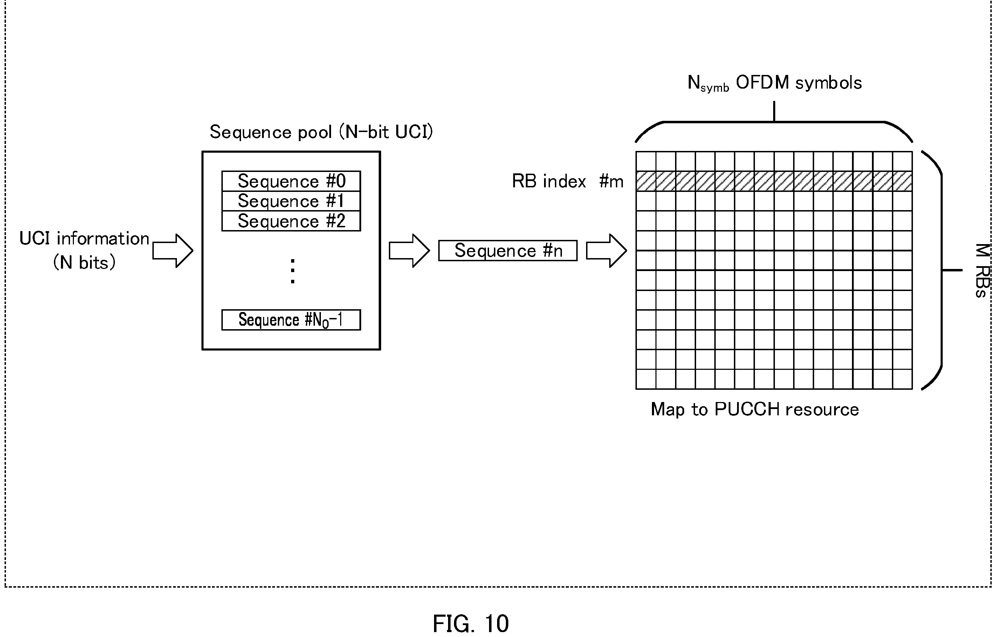

Further, in FIG. 9, a case where information on a sequence used for PUCCH transmission is indicated (or configured) to terminal 200 has been described, but the present disclosure is not limited thereto, and the information may be defined in a specification in advance. In this case, the reception processing of the information on the sequence pool may be omitted in the processing of S101 in FIG. 10.

Next, an exemplary transmission method of a PUCCH (for example, UCI) without using a DMRS will be described.

For example, in the present embodiment, it is assumed that the minimum value of the number of UCI bits supported in a PUCCH transmission without using a DMRS is "$N_{min}$", and that the maximum value of the number of UCI bits supported in a PUCCH transmission without using a DMRS is "$N_{max}$".

For example, $N_{min}$ may be one bit, three bits which is the minimum number of UCI bits supported by PUCCH format 3, or another value other than one bit and three bits.

Further, for example, Nmax may be 11 bits which are the maximum number of UCI bits supported with a Reed Muller code in an existing PUCCH format, or may be another value other than 11 bits.

In the present embodiment, as an example, a method (for example, Method 2) for transmitting a UCI bit by a combination of sequences is applied as a PUCCH transmission method without using a DMRS.

<Step 1>

For example, in a case where terminal 200 transmits N-bit UCI, a sequence pool which includes sequences with the number of sequences being $2^N$ or with the number of sequences being $2^N$ or more and is used for sequence selection is prepared.

<Step 1-1>

Terminal 200 generates an orthogonal sequence pool including, for example, $N_o = N_{subcarrier} \times N_{symb}$ sequences. Here, $N_{subcarrier}$ indicates the number of subcarriers per one symbol assigned to a PUCCH resource, and $N_{symb}$ indicates the number of symbols assigned to the PUCCH resource.

$N_{subcarrier}$ cyclic shift sequences can be generated for a sequence of sequence length $N_{subcarrier}$, and further, No = $N_{subcarrier} \times N_{symb}$ orthogonal sequences can be generated by performing code spreading with an OCC according to number $N_{symb}$ of symbols.

<Step 1-2>

In a case where number $N_O$ of orthogonal sequence is smaller than $2^N$, terminal 200 applies, for example, frequency resource (for example, resource block) selection in addition to sequence selection.

For example, in the resource block selection, M resource blocks to be allocated to PUCCH transmission may be reserved as a frequency domain resource for a PUCCH. For example, in a case where M resource blocks are reserved, $N'_O = N_{subcarrier} \times N_{symb} \times M$ combinations of orthogonal sequences and resource block selections can be realized.

For example, $N'_O \geq 2^N$ candidates for combinations may be generated by combining orthogonal sequences and resource block selections. For example, candidates (for example, $2^N$ candidates) for a combination of an orthogonal sequence and a resource block may be associated with $2^N$ values, respectively, where the $2^N$ values are values that may be taken as the value of N-bit UCI.

<Step 2>

Terminal 200 selects, for example, one combination from $2^N$ candidates for combinations of orthogonal sequences and resource block selections according to the value of a UCI bit(s) to be generated. At this time, one resource block among the M resource blocks may be selected by the selection of one combination at terminal 200.

<Step 3>

Terminal 200 maps the sequence corresponding to the selected combination to the resource block corresponding to the selected combination and transmits the sequence.

FIG. 10 illustrates an exemplary PUCCH transmission in the present embodiment. In FIG. 10, for example, a sequence pool including $N_O$ orthogonal sequences is prepared for N-bit UCI, and M resource blocks are reserved. Here, the number of candidates for combinations of $N_O$ orthogonal sequences and M resource blocks (for example, $N'_O = N_O \times M = N_{subcarrier} \times N_{symb} \times M$) may be equal to or larger than $2^N$.

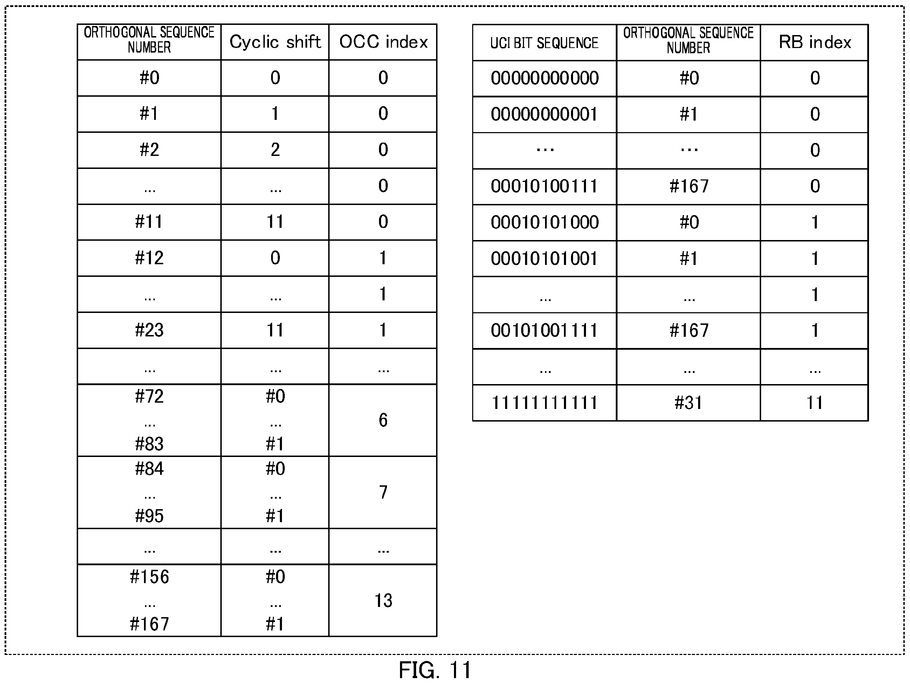

Further, FIG. 11 illustrates exemplary orthogonal sequences (for example, sequence numbers #0 to #167) that can be generated in the case of $N_{subcarrier} = 12$ and $N_{symb} = 14$ as an example. Note that, the associations among the sequence number (for example, the orthogonal sequence number), the cyclic shift and the OCC index are not limited to those in the example illustrated in FIG. 11. In addition, FIG. 11 illustrates exemplary associations of the UCI bit sequence with N = 11 bits with a combination of the sequence (for example, orthogonal sequence number) and the resource block selection (for example, RB index) as an example. In FIG. 11, for example, M = 12 resource blocks (for example, RB index = 0 to 11) may be reserved. Note that, the associations of the UCI bit(s) with the combination of the sequence and the resource block selection are not limited to those in the example illustrated in FIG. 11.

In FIG. 10, terminal 200 may select, for example, from candidates for combinations of $N_O$ orthogonal sequences and M resource blocks (for example, $N'_O = N_O \times M$), a combination (for example, sequence #n and RB index #m) associated with the value of UCI bit(s) to be generated. Then, terminal 200 may map sequence #n to the resource block of RB index #m and transmit sequence #n. As an example, in a case where UCI '00010101001' with N = 11 bits is transmitted in FIG. 11, terminal 200 may map sequence #1 (for example, Cyclic shift 1 and OCC index 0) to the resource block of RB index #1 and transmit the sequence.

Base station 100 may demodulate a received PUCCH (UCI) and identify the value of UCI bit(s) based on a combination of the sequence identified by the demodulation and the resource block to which the sequence is mapped. For example, in a case where the identified sequence is of sequence number #167 and the resource block to which the identified sequence is mapped is of RB index #0 in FIG. 11, base station 100 may identify the value of UCI bit(s) as '00010100111'.

Exemplary operations of base station 100 and terminal 200 have been described above.

As described above, in the present embodiment, terminal 200 determines, in a PUCCH transmission without using a DMRS, one combination from a plurality of combinations, each of which is a combination of a sequence and a resource block, according to the value of UCI bit(s), and transmits the sequence included in the determined one combination by using the resource block included in the determined one combination. Further, base station 100 receives a PUCCH signal, and identifies, based on an association of the value of UCI bit(s) with a combination of a sequence and a resource block in a PUCCH transmission without using a DMRS, the value of the UCI bit(s) corresponding to a sequence included in the received PUCCH signal and a resource block used for the signal.

Thus, in PUCCH transmission, one resource block is used, and narrowband transmission using one resource block can be maintained, and thus, it is possible to suppress an increase in transmission bandwidth and to increase orthogonal resources. Further, by applying the resource block selection, it is possible to avoid the use of a non-orthogonal sequence, and thus, an improvement in PUCCH coverage performance can be expected. Thus, according to the present embodiment, it is possible to improve the reception performance of a signal in an uplink transmission (for example, a PUCCH transmission or a UCI transmission) without using a DMRS.

(Embodiment 2)

Configurations of base station 100 and terminal 200 according to the present embodiment may be the same as the configurations in Embodiment 1.

For example, in the present embodiment, it is assumed that the minimum value of the number of UCI bits supported in a PUCCH transmission without using a DMRS is "$N_{min}$", and that the maximum value of the number of UCI bits supported in a PUCCH transmission without using a DMRS is "$N_{max}$".

For example, $N_{min}$ may be one bit, three bits which is the minimum number of UCI bits supported by PUCCH format 3, or another value other than one bit and three bits.

Further, for example, $N_{max}$ may be 11 bits which are the maximum number of UCI bits supported with a Reed Muller code in an existing PUCCH format, or may be another value other than 11 bits.

In the present embodiment, as an example, a method for transmitting a UCI bit(s) by sequence selection (for example, Method 2) is applied as a PUCCH transmission method without using a DMRS.

\<Step 1>

For example, in a case where terminal 200 transmits N-bit UCI, a sequence pool including sequences with the number of sequences being $2^N$ or with the number of sequences being $2^N$ or more and is used for sequence selection sequences is prepared.

\<Step 1-1>

Terminal 200 generates an orthogonal sequence pool including, for example, $N_o = N_{subcarrier} \times N_{symb}$ sequences. Here, $N_{subcarrier}$ indicates the number of subcarriers per one symbol assigned to a PUCCH resource, and $N_{symb}$ indicates the number of symbols assigned to the PUCCH resource.

$N_{subcarrier}$ cyclic shift sequences can be generated for a sequence of sequence length $N_{subcarrier}$, and further, $No = N_{subcarrier} \times N_{symb}$ orthogonal sequences can be generated by performing code spreading with an OCC according to number $N_{symb}$ of symbols.

\<Step 1-2>

In a case where number $N_O$ of orthogonal sequences is smaller than $2^N$, terminal 200 applies, for example, comb-index selection in addition to the sequence selection.

For example, in the comb-index selection, K resource blocks that are allocated to PUCCH transmission as a frequency domain resource for a PUCCH may be reserved. In a case where K resource blocks are reserved, for example, each resource block may be divided into combs including K comb-shaped subcarriers. For example, when one resource block is configured with 12 subcarriers, comb-index #n (n = 0 to K - 1) may be configured with subcarriers #n, #n + K, to #n + (12/K - 1)K. Accordingly, for example, since the number of subcarriers having the same comb-index in one resource block (12 subcarriers) is 12/K, the number of subcarriers constituting one comb across the entire K resource blocks is 12 subcarriers corresponding to one resource block.

For example, in a case where K resource blocks are reserved and a resource block is divided into K combs, N'o = $N_{subcarrier} \times N_{symb} \times K$ combinations of orthogonal sequences and comb-index selections can be realized.

For example, $N'_O \geq 2^N$ candidates for combinations may be generated by combining an orthogonal sequence(s) and a comb-index selection(s). For example, each of candidates for of combinations of orthogonal sequences and comb-indexes (for example, $2^N$ candidates) may be associated with $2^N$ values that N-bit UCI may take.

\<Step 2>

Terminal 200 selects one combination from $2^N$ candidates for combinations of orthogonal sequences and comb-index selections, for example, according to the value of a UCI bit(s) to be generated. At this time, by the selection of one combination by terminal 200, subcarriers for one resource block, which are subcarriers corresponding to one comb, among the K resource blocks may be selected.

\<Step 3>

Terminal 200 maps a sequence corresponding to the selected combination to a subcarrier(s) corresponding to the comb-index of the selected combination and transmits the sequence.

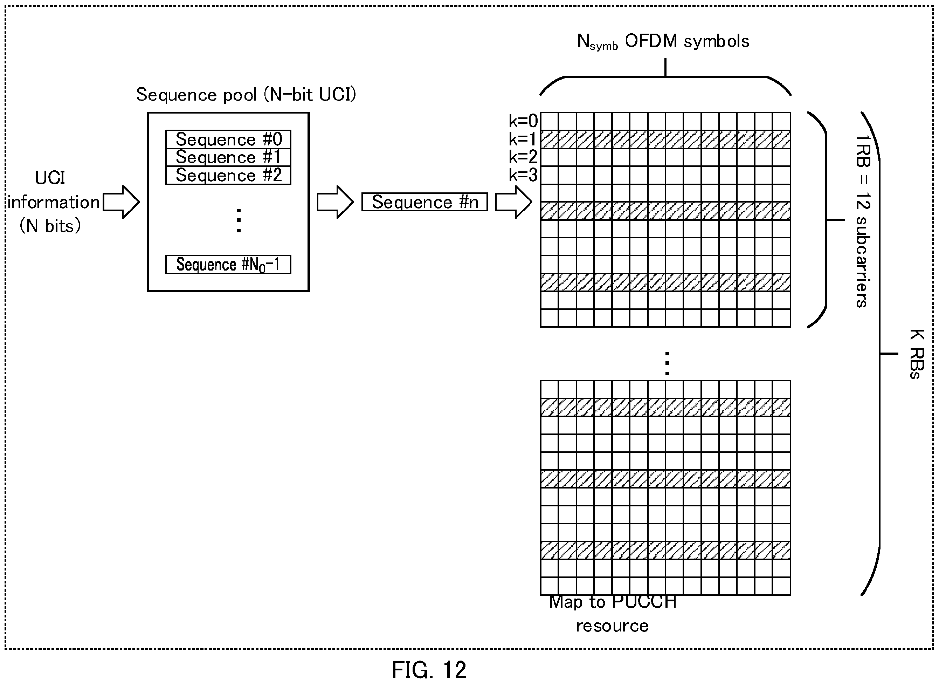

FIG. 12 illustrates an exemplary PUCCH transmission in the present embodiment. In FIG. 12, for example, a sequence pool including $N_O$ orthogonal sequences is prepared and K = 4 resource blocks are reserved, for N-bit UCI. Here, the number of candidates for combinations of $N_O$ orthogonal sequences and K resource blocks (for example, $N'_O = N_O \times K = N_{subcarrier} \times N_{symb} \times K$) may be equal to or larger than $2^N$.

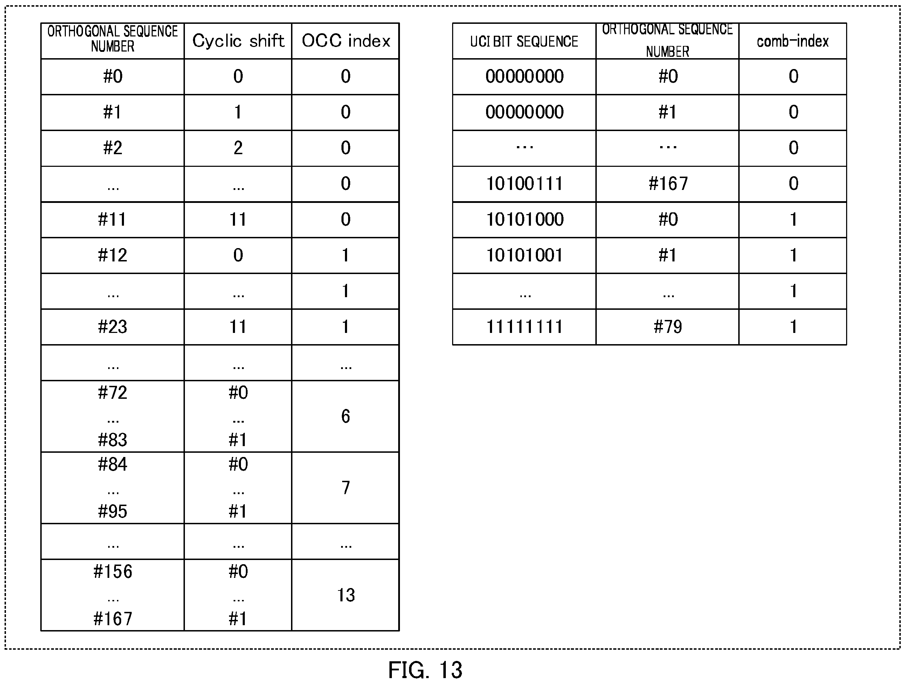

Further, FIG. 13 illustrates exemplary orthogonal sequences (for example, sequence numbers #0 to #167) that can be generated in the case of $N_{subcarrier} = 12$ and $N_{symb} = 14$ as an example. Note that, the associations among the sequence number (for example, the orthogonal sequence number), the cyclic shift, and the OCC index are not limited to those in the example illustrated in FIG. 13. In addition, FIG. 13 illustrates exemplary associations of the UCI bit sequence with N = 8 bits UCI with a combination of the sequence (for example, orthogonal sequence number) and the comb-index selection (for example, comb-index) as an example. In FIG. 13, for example, K = 2 (for example, comb-index = 0 to 1) resource blocks may be reserved. Note that, the associations of the UCI bit(s) and the combination of the sequence and the comb-index selection are not limited to those in the example illustrated in FIG. 13.

In FIG. 12, terminal 200 may select, for example, from candidates for combinations of $N_O$ orthogonal sequences and $K = 4$ comb-indexes (any of $k = 0$ to 3) (for example, $N'_O = N_O \times K$ candidates), a combination (sequence #n and $k = 1$ in the example in FIG. 12) associated with the value of a UCI bit(s) to be generated. Then, terminal 200 may map sequence #n to subcarriers corresponding to each comb-index #1 in the K resource blocks and transmit sequence #n. In the example illustrated in FIG. 12, sequence #n is mapped to 12 subcarriers in the $K = 4$ resource blocks, with three subcarriers per resource block, and is transmitted.

Further, as an example, in a case where UCI '10101001' with $N = 8$ bits is transmitted in FIG. 13, terminal 200 may map sequence #1 (for example, Cyclic shift 1 and OCC index 0) to subcarriers corresponding to each comb-index $k = 1$ in the two resource blocks and transmit the sequence.

Base station 100 may demodulate a received PUCCH (UCI) and identify the value of UCI bit(s) based on a combination of the sequence identified by the demodulation and the comb-index corresponding to a subcarrier(s) to which the sequence is mapped. For example, in a case where the identified sequence is of sequence number #167 and the subcarrier(s) to which the identified sequence is mapped is/are of comb-index $k = 0$ in FIG. 13, base station 100 may identify the value of UCI bit(s) as '10100111'.

Exemplary operations of base station 100 and terminal 200 have been described above.

As described above, in the present embodiment, one combination is determined from a plurality of combinations, each of which is a combination of a sequence and a comb, according to the value of a UCI bit(s) in a PUCCH transmission without using a DMRS, and the sequence included in the determined one combination is transmitted by using a subcarrier(s) corresponding to the comb included in the determined one combination. Further, base station 100 receives a PUCCH signal, and identifies, based on an association of the value of a UCI bit(s) with a combination of a sequence and a comb in a PUCCH transmission without using a DMRS, the value of the UCI bit(s) corresponding to a sequence included in the received PUCCH signal and a comb used for the signal.

For example, in a PUCCH transmission, each of K resource blocks is divided into K combs, and a sequence is transmitted by any one of the combs in each subblock. Thus, the number of subcarriers for transmitting a signal in the PUCCH transmission is subcarriers for one resource block (for example, 12 subcarriers). Thus, in the PUCCH transmission, it is possible to increase orthogonal resources while maintaining the same PSD as that in narrowband transmission. Further, by applying the comb-index selection, it is possible to avoid the use of a non-orthogonal sequence, and thus, an improvement in PUCCH coverage performance can be expected. Thus, according to the present embodiment, it is possible to improve the reception performance of a signal in an uplink transmission (for example, a PUCCH transmission or a UCI transmission) without using a DMRS.

Further, in the present embodiment, in comparison with Embodiment 1, a signal is mapped over the entire K resource blocks allocated to a PUCCH resource, and thus, there is an advantage that interference control between cells becomes relatively simple.

Note that, in FIG. 12, a case where comb-shaped subcarriers in each resource block, for example, subcarrier groups every K subcarriers in each resource block are used has been described as an example, but the subcarrier groups in each resource block are not limited to comb-shaped subcarriers. For example, the frequency resource selection may be performed in units of consecutive subcarriers in each resource block.

The embodiments according to a non-limiting example of the present disclosure have been each described, thus far.

(Variation 1)

In Embodiment 1, a case where when terminal 200 transmits N-bit UCI and number $N_O$ of orthogonal sequences is smaller than $2^N$, the resource block selection is applied, and the PUCCH frequency domain resource to be used in the resource block selection is M resource blocks satisfying $N'_O = N_{subcarrier} \times N_{symb} \times M \geq 2^N$ has been described.

Further, in Embodiment 2, a case where when terminal 200 transmits N-bit UCI and number $N_O$ of orthogonal sequences is smaller than $2^N$, the comb-index selection is applied, and the PUCCH frequency domain resource to be used in the comb-index selection is K resource blocks satisfying $N'o = N_{subcarrier} \times N_{symb} \times K \geq 2^N$ has been described.

In Embodiment 1 or 2, as number N of UCI bits increases, the frequency resources to be used are also likely to increase, and the spectral efficiency may be degraded.

In Variation 1, for example, the upper limit of the amount of available PUCCH frequency domain resources (for example, the number of resource blocks) may be configured (for example, limited).

For example, the number of available resource blocks may be 16 resource blocks, which can be supported by an existing PUCCH format, or may be another value.

Further, in Variation 1, for example, in a case where number $N'_O$ of combinations (the number of candidates) of orthogonal sequences and frequency resource selections (for example, resource block selections or comb-index selections) that can be generated in <Step 1-2> described in Embodiment 1 or 2 described above is smaller than $2^N$, terminal 200 may generate $N'_O \times N_{NO} \geq 2^N$ candidates for combinations by combining an orthogonal sequence(s), a frequency resource(s) and a non-orthogonal sequence(s). Note that, for example, the method described in NPL 8 (e.g., a method for generating a plurality of non-orthogonal sequences by varying the initial value of an M sequence) or another method may be applied to the method for generating a non-orthogonal sequence.

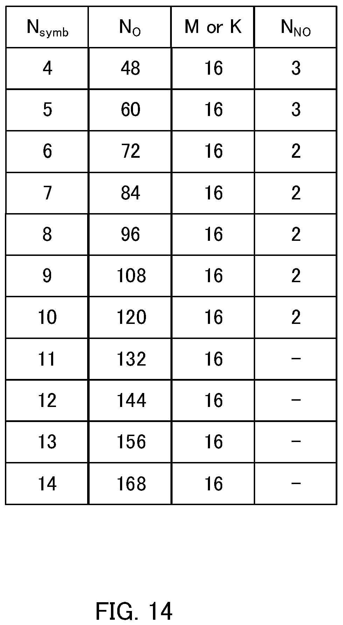

As an example, a case where the number of available resource blocks (M or K) is limited to 16 will be described. FIG. 14 illustrates number $N_O$ of orthogonal sequences, which can be generated in a case where M or N = 16 and $N_{symb}$ symbols are assigned to a PUCCH resource, and number $N_{NO}$ of non-orthogonal sequences to be used in a case where UCI of N = 11 bits is transmitted.

For example, in the case of N = 11 bits, the value that may be taken as the UCI bit value is $2^{11}$ = 2048, and thus, at least $2^{11}$ = 2048 candidates for combinations of sequences and frequency resource selections are prepared as the number of candidates for combinations. In this case, as illustrated in FIG. 14, when $N_{symb}$ = 4 to 10, 2048 candidates for combinations are not reserved with combinations of $N_O$ orthogonal sequences and 16 frequency resources (for example, resource blocks or comb-indexes), and thus, 2048 or more candidates for combinations may be generated by using $N_{NO}$ = 2 non-orthogonal sequences in addition to an orthogonal sequence(s) and a frequency resource selection(s).

According to Variation 1, in addition to orthogonal and non-orthogonal sequences, the application of frequency resource selection makes it possible to significantly reduce the number of non-orthogonal sequences, for example, as compared to a case where orthogonal and non-orthogonal sequence are applied (for example, FIG. 4), and thus, it is possible to suppress the deterioration in transmission performance due to the use of a non-orthogonal sequence.

Further, in Variation 1, since the amount of available PUCCH frequency domain resources can be limited, it is possible to improve spectral efficiency.

(Variation 2)

In Embodiments 1 and 2 and Variation 1 described above, a case where has been orthogonal sequences are generated in Step 1-1, the resource block selection (or the comb-index selection) is applied in Step 1-2, and a combination of an orthogonal sequence and a resource block (or a comb-index) is generated has been described.

The combination generation method (for example, the order of processing) is not limited to the above-described method. In Variation 2, for example, in Step 1-1, the resource block selection (or the comb-index selection) may be applied, and in Step 1-2, orthogonal sequences may be generated, as described below.

<Step 1-1>

For example, M resource blocks are reserved as a frequency domain resource for a PUCCH, and terminal 200 generates M candidates for resource block selections. Alternatively, K resource blocks are reserved as a frequency domain resource for a PUCCH, and terminal 200 generates K candidates for comb-index selections.

<Step 1-2>

For example, in a case where M (or K) is smaller than $2^N$, terminal 200 generates an orthogonal sequence pool including, for example, $N_O = N_{subcarrier} \times N_{symb}$ sequences. Here, $N_{subcarrier}$ indicates the number of subcarriers (for example, 12 subcarriers) per one symbol assigned to a PUCCH resource, and $N_{symb}$ indicates the number of symbols assigned to a PUCCH resource. For example, $N_{subcarrier}$ cyclic shift sequences can be generated for a sequence of sequence length $N_{subcarrier}$, and further, No = $N_{subcarrier} \times N_{symb}$ orthogonal sequences can be generated by performing code spreading with an OCC according to number $N_{symb}$ of symbols.

For example, $N'_O = M \times N_{subcarrier} \times N_{symb}$ combinations of resource block selections and orthogonal sequences can be realized. Further, N'o = $K \times N_{subcarrier} \times N_{symb}$ combinations of comb-index selections and orthogonal sequences can be realized.

<Step 1-3>

In a case where number $N'_O$ of candidates for combinations generated in Step 1-2 is smaller than $2^N$, terminal 200 may generate $N'_O \times N_{NO} \geq 2^N$ combinations by combining a non-orthogonal sequence(s) therewith, for example. Note that, for example, the method described in NPL 8 (e.g., a method for generating a plurality of non-orthogonal sequences by varying the initial value of an M sequence) or another method may be applied to the method for generating a non-orthogonal sequence.

According to Variation 2, in a case where the number of UCI bits is $\log_2 M$ or equal to or less than $\log_2 K$, the frequency resource selection (for example, the resource block selection or the comb-index selection) is applied to UCI transmission, and no orthogonal sequence is applied to Step 1-1. For this reason, for example, multiplexing of a plurality of terminals in the same time-frequency resource using an orthogonal sequence is possible.

(Variation 3)

In Embodiment 2, the comb-index selection between K resource blocks has been assumed to be the same, but the present disclosure is not limited to this.

For example, UCI bit transmission is possible with a combination of comb-index selection for each resource block. For example, a comb-index may be selected individually for each of a plurality of resource blocks. Further, for example, a combination of a comb-index, which is selected individually for each of a plurality of resource blocks, may be associated with the value of UCI bits. For example, in PUCCH transmission of M resource blocks including K comb-indexes, the number of combinations of comb-index selections for each resource block is $K^M$. Accordingly, in Variation 3, for example, it is possible to realize N'o = $N_{subcarrier} \times N_{symb} \times K^M$ candidates for combinations of orthogonal sequences and comb-index selections as the number of candidates for combinations.

Further, for example, UCI bit transmission is possible with a combination of comb-index selection between symbols. For example, a comb-index may be selected individually for each of a plurality of symbols assigned to PUCCH transmission. Further, for example, a combination of a frequency resource (for example, a resource block or a comb-index), which is selected individually for each of a plurality of symbols assigned to PUCCH transmission, may be associated with the value of UCI bits. For example, in PUCCH transmission of M resource blocks including K comb-indexes and $N_{symb}$ symbols, the number of combinations of comb-index selections for each symbol is $K^{Nsymb}$. Accordingly, in Variation 3, for example, it is possible to realize N'o = $N_{subcarrier} \times N_{symb} \times K^{Nsymb}$ candidates for combinations of orthogonal sequences and comb-index selections as the number of candidates for combinations.

Note that, even in Embodiment 1, UCI bit transmission is possible with a combination of resource block selection between $N_{symb}$ symbols.

Further, for example, comb-index selection between resource blocks and comb-index selection between symbols may be combined and used. For example, a comb-index may be selected individually for each of a plurality of resource blocks allocated to PUCCH transmission, and further a combination of a comb-index selected in each resource block may be individually configured for each of a plurality of symbols assigned to PUCCH transmission. Further, a combination of a comb-index, which is individually selected in each of a plurality of resource blocks for each of a plurality of symbols assigned to PUCCH transmission, may be associated with the UCI bit value. In that case, it is possible to realize N'o = $N_{subcarrier} \times N_{symb} \times K^M \times K^{Nsymb}$ candidates for combinations of orthogonal sequences and comb-index selections as the number of candidate combinations.

According to Variation 3, terminal 200 can transmit a UCI bit(s) by using a combination of comb-index selection between resource blocks or between symbols, thereby reducing the use of a non-orthogonal sequence. Further, it is possible to reduce PUCCH frequency resources and improve the spectral efficiency.

Variation 3 has been each described, thus far.

(Other Embodiments)

(1) For example, Repetition in which a PUCCH is transmitted over a plurality of slots may be applied in order to improve the PUCCH coverage.

As a Repetition application method for the PUCCH transmission method without using a DMRS described above, a method of simply repeatedly transmitting a PUCCH (for example, a signal for one slot) without using a DMRS, which is generated by the method described above, over a plurality of slots is conceivable, for example.

Further, as a Repetition method, for example, Repetition in a slot unit or a mini-slot unit (for example, non-contiguous symbol Repetition) adopted in NR may be applied, or Repetition in a symbol unit in which the same OFDM symbol is continuously transmitted may be applied. The former is expected to improve the accuracy of residual frequency offset estimation from the fact that the same symbol is transmitted as a non-contiguous symbol. Further, the received SNR can be improved in the latter since it is easy to in-phase combine symbols to be continuously transmitted with each other.

Further, since a PUCCH resource (for example, the number of symbols) in the time domain increases by Repetition, the number of symbols or the number of resource elements included in a PUCCH resource in the embodiments described above may be replaced with the number of symbols or the number of resource elements in a PUCCH resource including Repetition (for example, for a plurality of slots).

Further, for example, in <Step 1-1> of the embodiments described above, an orthogonal sequence pool including $N_{NO} = N_{subcarrier} \times N_{symb} \times N_{Rep}$ sequences may be generated. Here, $N_{subcarrier}$ represents the number of subcarriers per one symbol assigned to a PUCCH resource, $N_{symb}$ represents the number of symbols assigned to a PUCCH resource, and $N_{Rep}$ represents the number of Repetitions.

For example, $N_{subcarrier}$ cyclic shift sequences can be generated for a sequence of sequence length $N_{subcarrier}$, and No = $N_{subcarrier} \times N_{symb} \times N_{Rep}$ orthogonal sequences can be generated by performing code spreading with an OCC according to number $N_{symb}$ of symbols and number $N_{Rep}$ of Repetitions.

(2) The sequence in the non-limiting embodiment of the present disclosure may not be a sequence that is actually transmitted, and may be, for example, a logical sequence.

For example, the mapping between a sequence that is actually transmitted and a logical sequence may be the same or different between terminals 200. For example, an association of sequence number n, which is logical, with sequence number m, which is actually transmitted, may be determined based on a parameter configured in a higher layer such as RRC, or may be determined based on a terminal ID or a cell ID.

(3) For example, it is assumed that the minimum value of the number of UCI bits supported in a PUCCH transmission without using a DMRS is "$N_{min}$", and that the maximum value of the number of UCI bits supported in a PUCCH transmission without using a DMRS is "$N_{max}$".

For example, $N_{min}$ may be one bit, three bits which is the minimum number of UCI bits supported by PUCCH format 3, or another value other than one bit and three bits.

Further, for example, $N_{max}$ may be 11 bits which are the maximum number of UCI bits supported with a Reed Muller code in an existing PUCCH format, or may be another value other than 11 bits.

For example, the number of candidates for combinations of sequences and frequency resources, which are generated, may be replaced with the following value instead of $2^N$.

$$[1]$$

$$\sum_{n=N_{min}}^{N_{max}} 2^n$$

Terminal 200 selects, for example, from among candidates for a combination of

$$[2]$$

$$\sum_{n=N_{min}}^{N_{max}} 2^n$$

candidates for combinations, one combination according to the number of UCI bits to be generated and the UCI bit value. Then, terminal 200 may map the sequence included in the selected combination to the frequency resource included in the selected combination and transmit the sequence.

A candidate for a combination of a sequence and a frequency resources is divided into, for example, subsets each of which corresponds to each number of UCI bits (for example, $N_{min}$ bits to $N_{max}$ bits). For example, a pool including candidates for combinations of sequences and frequency resources may include a plurality of subsets each of which is associated with a candidate for the number of UCI bits. Further, each of a plurality of subsets may include, for example, candidates for combinations each of which is associated with a candidate for UCI bits of N bits (for example, $2^N$ values).

When terminal 200 transmits N-bit UCI, for example, terminal 200 may select a subset corresponding to the N-bit UCI from a plurality of subsets, and further may select one combination from $2^N$ candidates for combinations included in the subset according to the UCI bit value.

As described above, terminal 200 can transmit UCI bit information by a candidate for a sequence combination. Further, terminal 200 can transmit information on the number of UCI bits by a subset to which a candidate for a combination to be transmitted belongs. Base station 100 can, for example, demodulate a PUCCH, determine based on which candidate for a combination UCI has been transmitted, and identify a subset to which the candidate for the combination belongs, thereby identifying the number of UCI bits that terminal 200 has transmitted.

Thus, for example, even in a case where terminal 200 fails in DCI decoding, base station 100 can identify, in addition to the UCI bits transmitted by terminal 200, the number of UCI bits accurately, based on the received sequence of UCI, and thus, the discrepancy in the number of UCI bits between base station 100 and terminal 200 can be suppressed.

Note that, candidates for combinations, which are included in the same subset, may include the same frequency resource (for example, a resource block or a comb-index). Thus, since candidates for combinations corresponding to the same number of UCI bits are associated with the same resource block or comb-index, there is an advantage that the demodulation processing at base station 100 can be simplified.

Further, candidates for combinations included in the same subset may include different frequency resources (for example, resource blocks or comb-indexes). Thus, even when orthogonality between candidates for combinations included in the same subset is not maintained due to influences such as channel variation, the orthogonality between candidates for combinations included in the same subset can be maintained by different frequency resources.

(4) In another embodiment (3), terminal 200 transmits information on the number of UCI bits, for example, by selecting a combination of a sequence and a frequency resource.

Here, for example, it is assumed that the minimum value of the number of UCI bits supported in a PUCCH transmission without using a DMRS is "$N_{min}$", and that the maximum value of the number of UCI bits supported in a PUCCH transmission without using a DMRS is "$N_{max}$".

In this case, the information on the number of UCI bits corresponds to each of the $(N_{max} - N_{min} + 1)$ subsets in a candidate for a combination.

Here, for example, among a plurality of candidates for combinations of sequences and frequency resources, candidates for combinations included in different subsets each of which corresponds to information on the number of UCI bits are caused to correspond to a candidate for a combination with higher reliability.

For example, different frequency resources may be caused to correspond to each subset. For example, M resource blocks may be sorted into $(N_{max} - N_{min} + 1)$ subsets. For example, M resource blocks may be dispersedly allocated to each of $(N_{max} - N_{min} + 1)$ subsets, respectively.

For example, when the number of resource blocks to be sorted into a subset corresponding to N-bit UCI is denoted as "$M_n$", the following may be satisfied.

$$[3]$$

$$\sum_{n=N_{min}}^{N_{max}} M_n \leq M$$

Further, for example, K comb-indexes may be sorted into $(N_{max} - N_{min} + 1)$ subsets. For example, K comb-indexes may be dispersedly allocated to $(N_{max} - N_{min} + 1)$ subsets, respectively.

For example, when the number of comb-indexes to be sorted into a subset corresponding to n-bit UCI is denoted as "$K_n$", the following may be satisfied.

$$[4]$$

$$\sum_{n=N_{min}}^{N_{max}} K_n \leq K$$

Further, for example, in a case where number $M_n$ of resource blocks (or number $K_n$ of comb-indexes) included in a subset corresponding to n-bit UCI is smaller than $2^N$, $2^N$ candidates for combinations may be generated in the subset by combining frequency resources and sequences (for example, orthogonal or non-orthogonal sequences).

According to this method, orthogonality between subsets is easily maintained since different frequency resource selections are used between subsets. Thus, it is possible to improve the reliability of information on the number of UCI bits and contribute to improving the UCI demodulation performance.

Further, on the reception side (for example, base station 100), a frequency resource may be first identified as an implementation method for demodulating a PUCCH through which the frequency resource and a sequence (for example, an orthogonal sequence or a non-orthogonal sequence) are transmitted in combination. In this case, by performing subset identification starting from the frequency resource on the reception side, the number of candidates for combinations to be searched during the demodulation can be reduced, and the demodulation processing can be simplified.

(5) In the above-described embodiments, orthogonal sequences constituted by $N_{NO} = N_{subcarrier} \times N_{symb}$ sequences are generated. Here, $N_{subcarrier}$ indicates the number of subcarriers per one symbol assigned to a PUCCH resource, and $N_{symb}$ indicates the number of symbols assigned to a PUCCH resource.

For example, $N_{subcarrier}$ cyclic shift sequences can be generated for a sequence of sequence length

$N_{subcarrier}$, and further, $No = N_{subcarrier} \times N_{symb}$ orthogonal sequences can be generated by performing code spreading with an OCC according to number $N_{symb}$ of symbols.

Further, for example, in a case where number $N_{NO}$ of orthogonal sequences is $2^N$, or smaller than

$$[5]$$

$$\sum_{n=N_{min}}^{N_{max}} 2^n,$$

$2^N$ or

$$[6]$$

$$\sum_{n=N_{min}}^{N_{max}} 2^n$$

candidates for combinations are generated by performing the frequency resource selection, or by combining a non-orthogonal sequence(s) therewith if necessary.

For example, the number of available orthogonal sequences, the number of available frequency resources, and the number of available non-orthogonal sequences (for example, the upper limits) may be configured (for example, limited) to a power of two.

For example, the first $(\log_2 N_O)$ bit of a UCI bit sequence may be assigned (or mapped) to an orthogonal sequence, the next $\log_2 M$ bit or $\log_2 K$ bit may be caused to correspond to the frequency resource selection, and the remaining UCI bits may be assigned (or may be mapped) to a non-orthogonal sequence. Thus, a UCI bit sequence can be divided into a bit sequence corresponding to an orthogonal sequence, a bit sequence corresponding to the frequency resource selection, and a bit sequence corresponding to a non-orthogonal sequence. For this reason, there is an advantage that the processing of mapping a UCI bit(s) to a sequence on the transmission side (for example, terminal 200) and the demodulation processing on the reception side (for example, base station 100) can be simplified.

The other embodiments have been described, thus far.

Note that, UCI multiplexing transmission in a PUCCH has been described in the embodiments described above, but the channel used for the multiplexing transmission is not limited to PUCCH, and may be other channels. Further, the type of information to be transmitted is not limited to UCI, but may be information of other types (e.g., uplink data signal). Further, an exemplary embodiment of the present disclosure is not limited to the uplink transmission, but may be applied to downlink transmission or sidelink transmission.

Further, the parameters such as the number of subcarriers, the number of resource blocks, the number of comb-indexes, the number of symbols, the number of orthogonal sequences, the number of non-orthogonal sequences, and the number of UCI bits supported in a PUCCH transmission, which have been exemplified in the present disclosure, are merely examples, and may be other values.

Further, in the above embodiments, a case where UCI is transmitted using one resource or frequency resources (for example, 12 subcarriers) corresponding to one resource block has been described, but the frequency resource size in which UCI is transmitted is not limited to one resource block and may be, for example, two or more resource blocks, 13 or more subcarriers, or 11 or less subcarriers.

Further, in the present disclosure, Repetition may also be referred to as, for example, slot aggregation, slot bundling, TTI aggregation, or TTI bundling.

The present disclosure may be applied to, for example, communication between terminals, such as sidelink communication.

Further, in the present disclosure, a downlink control channel, a downlink data channel, an uplink control channel, and an uplink data channel are not limited to PDCCH, PDSCH, PUCCH, and PUSCH, respectively, and may be control channels having other names.

Further, in the present disclosure, the RRC signaling is assumed for the higher layer signaling, but the signaling may be replaced with Medium Access Control (MAC) signaling and indication by DCI that is physical layer signaling.

(Complement)

Information indicating whether terminal 200 supports the functions, operations, or pieces of processing that have been indicated in the above-mentioned embodiments, variations, and complements may be transmitted (or indicated) from terminal 200 to base station 100, as capability information or a capability parameter for terminal 200, for example.

The capability information may include information elements (IEs) that individually indicate whether terminal 200 supports at least one of the functions, operations, or pieces of processing that have been described in the above-mentioned embodiments, variations, and complements. Alternatively, the capability information may include information elements that indicate whether terminal 200 supports a combination of any two or more of the functions, operations, or pieces of processing that have been described in the above-mentioned embodiments, variations, and complements.

Base station 100 may determine (or decide or assume), for example, based on the capability information received from terminal 200, the functions, operations, or processes that are supported (or not supported) by terminal 200, which is a transmission source of the capability information. Base station 100 may execute operations, processes, or control in accordance with a determination result based on the capability information. For example, base station 100 may control uplink-related processing based on the capability information received from terminal 200.

Note that in a case where terminal 200 does not entirely support the functions, operations, or pieces of processing described in the above-mentioned embodiments, variations, and complements, such an unsupported part of the functions, operations, or processes may be interpreted as a limitation in terminal 200. For example, information or a request relating to such limitation may be indicated to base station 100.

The information on the capability or the limitation of terminal 200 may be defined by standards or may be implicitly indicated to base station 100 in association with information known in base station 100 or information to be transmitted to base station 100, for example.

The embodiments, the variations, and the complements according to a non-limiting and exemplary embodiment of the present disclosure have been each described, thus far.

(Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

(Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, the base station may be replaced with a terminal. The base station may be a relay apparatus that relays communication between a higher node and a terminal. The base station may be a roadside unit as well.

(Uplink/Downlink/Sidelink)

The present disclosure may be applied to any of uplink, downlink and sidelink. The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

(Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

(Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

(Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

(Frequency Bands)

The present disclosure may be applied to any of a licensed band and an unlicensed band.

(Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

(Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

<5G NR System Architecture and Protocol Stack>

3GPP has been working on the next release for the 5th generation cellular technology (simply called "5G"), including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).

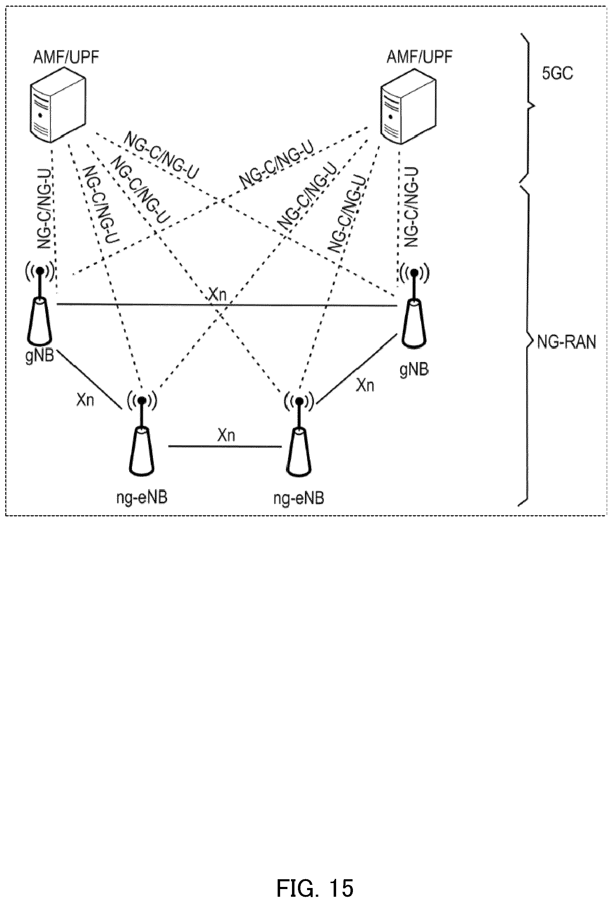

For example, the overall system architecture assumes an NG-RAN (Next Generation-Radio Access Network) that includes gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 15 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see clause 6.4 of TS 38.300), RLC (Radio Link Control, see clause 6.3 of TS 38.300) and MAC (Medium Access Control, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). A control plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates on the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/km2 in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz... are being considered at the moment. The symbol duration Tu and the subcarrier spacing $\Delta f$ are directly related through the formula $\Delta f = 1/Tu$. In a similar manner as in LTE systems, the term "resource element" can be used to denote a minimum resource unit being composed of one subcarrier for the length of one OFDM/SC-FDMA symbol.

In the new radio system 5G-NR for each numerology and each carrier, resource grids of subcarriers and OFDM symbols are defined respectively for uplink and downlink. Each element in the resource grids is called a resource element and is identified based on the frequency index in the frequency domain and the symbol position in the time domain (see 3GPP TS 38.211 v15.6.0).

<Functional Split between NG-RAN and 5GC in 5G NR>

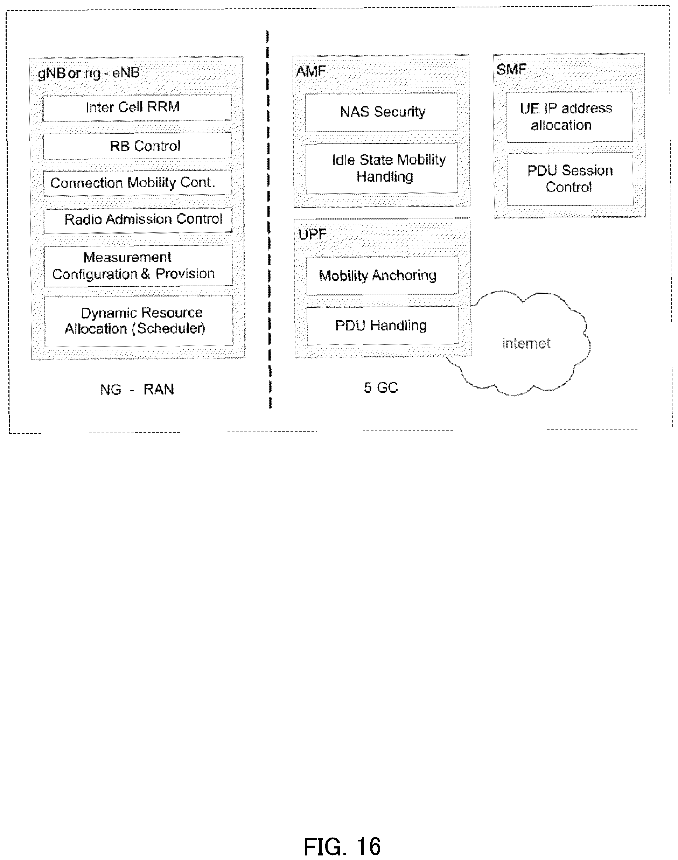

FIG. 16 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:

- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or an operation management maintenance function (OAM: Operation, Admission, Maintenance));
- Measurement and measurement reporting configuration for mobility and scheduling;
- Transport level packet marking in the uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:

- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:

- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:

- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

<RRC Connection Setup and Reconfiguration Procedure>

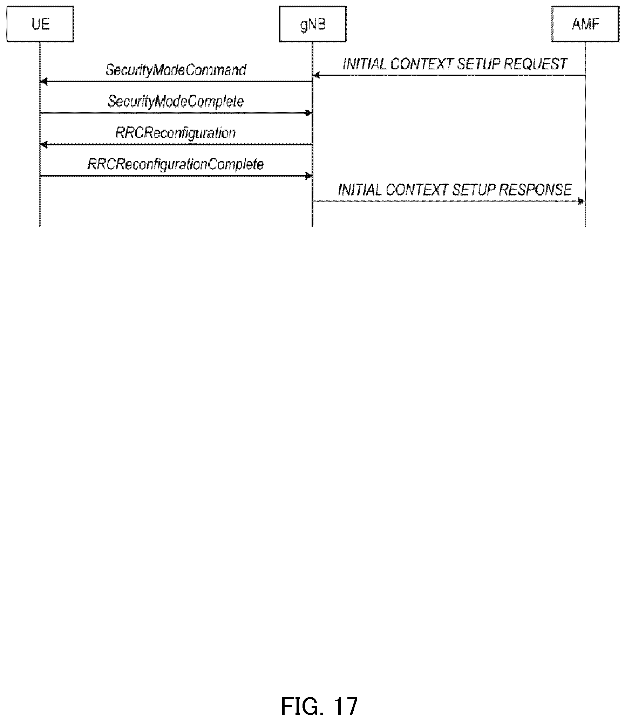

FIG. 17 illustrates some interactions between a UE, gNB, and AMF (a 5GC Entity) performed in the context of a transition of the UE from RRC_IDLE to RRC_CONNECTED for the NAS part (see TS 38 300 v15.6.0).
The RRC is higher layer signaling (protocol) used to configure the UE and gNB. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityModeCommand message and by the UE responding to the gNB with the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB indicates the AMF that the setup procedure is completed with INITIAL CONTEXT SETUP RESPONSE.
Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

<Usage Scenarios of IMT for 2020 and beyond>

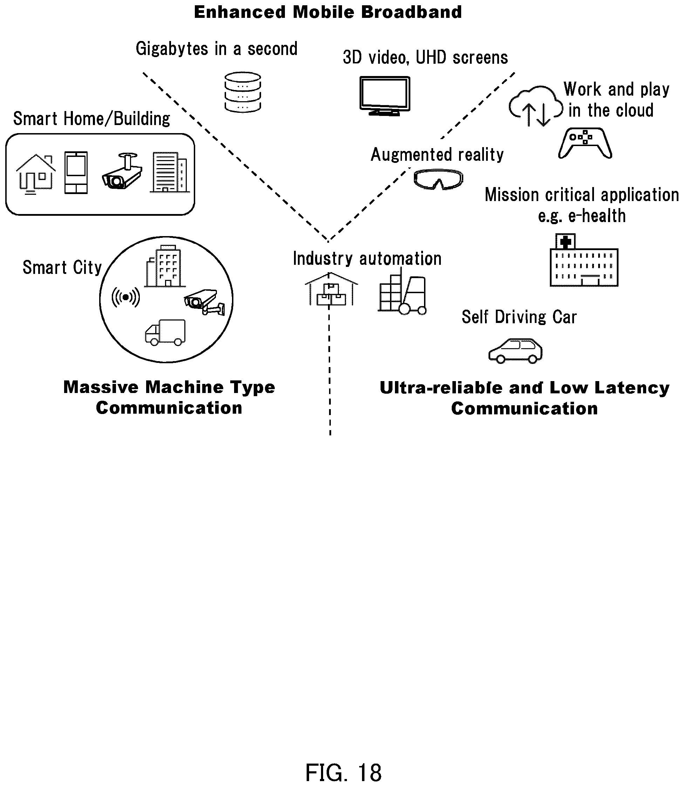

FIG. 18 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 18 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety. Ultra-reliability for URLLC is to be supported by identifying the techniques to meet the requirements set by TR 38.913. For NR URLLC in Release 15, key requirements include a target user plane latency of 0.5 ms for LTL (uplink) and 0.5 ms for DL (downlink). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, or the like. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been envisioned such as factory automation, transport industry and electrical power distribution. The tighter requirements are higher reliability (up to 10-6 level), higher availability, packet sizes of up to 256 bytes, time synchronization up to the extent of a few μs (where the value can be one or a few μs depending on frequency range and short latency on the order of 0.5 to 1 ms (in particular a target user plane latency of 0.5 ms), depending on the use cases).

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

<QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU sessions. For each UE, the NG-RAN establishes at least one Data Radio Bearer (DRB) together with the PDU session, e.g., as illustrated above with reference to FIG. 17. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

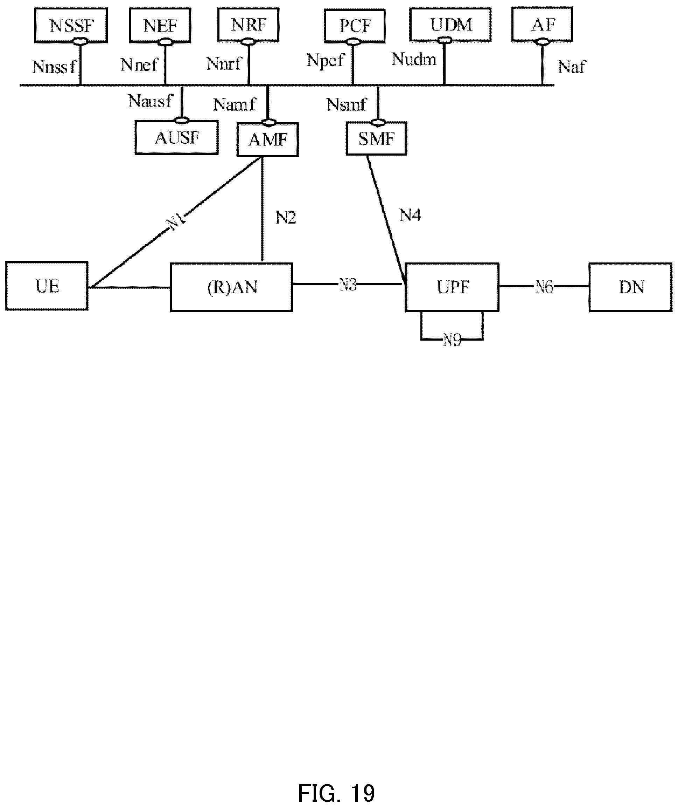

FIG. 19 illustrates a 5G NR non-roaming reference architecture (see TS 23.501 v16.1.0, section 4.23). An Application Function (AF) (e.g., an external application server hosting 5G services, exemplarily described in FIG. 18) interacts with the 3GPP Core Network in order to provide services, for example to support application influencing on traffic routing, accessing Network Exposure Function (NEF) or interacting with the policy framework for policy control (e.g., QoS control) (see Policy Control Function, PCF). Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 19 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or third party services). All of or a part of the core network functions and the application services may be deployed and running on cloud computing environments.

In the present disclosure, thus, an application server (e.g., AF of the 5G architecture), is provided that includes: a transmitter, which in operation, transmits a request containing a QoS requirement for at least one of URLLC, eMMB and mMTC services to at least one of functions (such as NEF, AMF, SMF, PCF, and UPF) of the 5GC to establish a PDU session including a radio bearer between a gNodeB and a UE in accordance with the QoS requirement; and control circuitry, which, in operation, performs the services using the established PDU session.

In the description of the present disclosure, the term ending with a suffix, such as "-er" "-or" or "-ar" may be interchangeably replaced with another term, such as "circuit (circuitry)," "device," "unit," or "module."

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA(Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smartphone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A terminal according to an exemplary embodiment of the present disclosure includes: control circuitry, which, in operation, determines one combination from a plurality of combinations, each of which is a combination of a sequence and a frequency resource, according to a value of an information bit in an uplink transmission without using a reference signal; and transmission circuitry, which, in operation, transmits the sequence included in the one combination by using the frequency resource included in the one combination, in the uplink transmission without using the reference signal.

In an exemplary embodiment of the present disclosure, the frequency resource is a resource block allocated to the uplink transmission, and the control circuitry selects one resource block among a plurality of the resource blocks according to the value of the information bit.

In an exemplary embodiment of the present disclosure, the frequency resource is a plurality of subcarrier groups obtained by dividing each of a plurality of resource blocks, where the plurality of resource blocks is allocated to the uplink transmission, and the control circuitry selects one subcarrier group among the plurality of subcarrier groups according to the value of the information bit.

In an exemplary embodiment of the present disclosure, one of the plurality of subcarrier groups includes a comb-shaped subcarrier in the resource block.

In an exemplary embodiment of the present disclosure, an upper limit value is configured to an amount of the frequency resource.

In an exemplary embodiment of the present disclosure, in a case where a number of candidates for combinations corresponding to the information bit is smaller than $2^N$, $2^N$ candidates for the combination are generated by using one or a plurality of orthogonal sequences, one or a plurality of the frequency resources, and at least one non-orthogonal sequence, where each of the combinations is a combination of one of the plurality of orthogonal sequences and one of the plurality of frequency resources, and the information bit is N-bit information bit.

In an exemplary embodiment of the present disclosure, a combination of one of the plurality of subcarrier groups is associated with the value of the information bit, where the one of the plurality of subcarrier groups is selected individually for each of the plurality of resource blocks.

In an exemplary embodiment of the present disclosure, a combination of one of the plurality of subcarrier groups is associated with the value of the information bit, where the one of the plurality of subcarrier groups is selected individually for each of a plurality of symbols assigned to the uplink transmission.

In an exemplary embodiment of the present disclosure, a combination of the frequency resource is associated with the value of the information bit, where the frequency resource is selected individually for each of a plurality of symbols allocated to the uplink transmission.

A base station according to an exemplary embodiment of the present disclosure includes: reception circuitry, which, in operation, receives a signal; and control circuitry, which, in operation, identifies, based on an association of a value of an information bit with a combination of a sequence and a frequency resource in an uplink transmission without using a reference signal, the value of the information bit corresponding to a sequence included in the signal and a frequency resource used for the signal.

A communication method according to an exemplary embodiment of the present disclosure includes: determining, by a terminal, one combination from a plurality of combinations, each of which is a combination of a sequence and a frequency resource, according to a value of an information bit in an uplink transmission without using a reference signal; and transmitting, by the terminal, the sequence included in the one combination by using the frequency resource included in the one combination, in the uplink transmission without using the reference signal.

A communication method according to an exemplary embodiment of the present disclosure includes: receiving, by a base station, a signal; and identifying, by the base station, based on an association of a value of an information bit with a combination of a sequence and a frequency resource in an uplink transmission without using a reference signal, the value of the information bit corresponding to a sequence included in a signal and a frequency resource used for the signal.

The disclosure of Japanese Patent Application No. 2022-049014, filed on March 24, 2022, including the specification, drawings and abstract, is incorporated herein by reference in its entirety.

Industrial Applicability

An exemplary embodiment of the present disclosure is useful for radio communication systems.

Reference Signs List

100 Base station
101, 205 Controller
102 Higher-layer control signal generator
103 Downlink control information generator
104, 206 Encoder

105, 207 Modulator
106, 208 Signal assigner
107, 209 Transmitter
108, 201 Receiver
109, 202 Extractor
110, 203 Demodulator
111, 204 Decoder
200 Terminal

**Claims**

1.  A terminal, comprising:

    control circuitry, which, in operation, determines one combination from a plurality of combinations according to a value of an information bit in an uplink transmission without using a reference signal, each of the plurality of combinations being a combination of a sequence and a frequency resource; and
    transmission circuitry, which, in operation, transmits the sequence included in the one combination by using the frequency resource included in the one combination.

2.  The terminal according to claim 1, wherein:

    the frequency resource is a resource block allocated to the uplink transmission, and
    the control circuitry selects one resource block among a plurality of the resource blocks according to the value of the information bit.

3.  The terminal according to claim 1, wherein:

    the frequency resource is a plurality of subcarrier groups obtained by dividing each of a plurality of resource blocks, the plurality of resource blocks being allocated to the uplink transmission, and
    the control circuitry selects one subcarrier group among the plurality of subcarrier groups according to the value of the information bit.

4.  The terminal according to claim 3, wherein one of the plurality of subcarrier groups includes a comb-shaped subcarrier in the resource block.

5.  The terminal according to claim 1, wherein an upper limit value is configured to an amount of the frequency resource.

6.  The terminal according to claim 4, wherein in a case where a number of candidates for combinations corresponding to the information bit is smaller than $2^N$, $2^N$ candidates for the combination are generated by using one or a plurality of orthogonal sequences, one or a plurality of the frequency resources, and at least one non-orthogonal sequence, each of the combinations being a combination of one of the plurality of orthogonal sequences and one of the plurality of frequency resources, the information bit being N-bit information bit.

7.  The terminal according to claim 3, wherein a combination of one of the plurality of subcarrier groups is associated with the value of the information bit, the one of the plurality of subcarrier groups being selected individually for each of the plurality of resource blocks.

8.  The terminal according to claim 3, wherein a combination of one of the plurality of subcarrier groups is associated with the value of the information bit, the one of the plurality of subcarrier groups being selected individually for each of a plurality of symbols assigned to the uplink transmission.

9.  The terminal according to claim 1, wherein a combination of the frequency resource is associated with the value of the information bit, the frequency resource being selected individually for each of a plurality of symbols allocated to the uplink transmission.

10. A base station, comprising:

    reception circuitry, which, in operation, receives a signal; and
    control circuitry, which, in operation, identifies, based on an association of a value of an information bit with a combination of a sequence and a frequency resource in an uplink transmission without using a reference signal, the value of the information bit corresponding to a sequence included in the signal and a frequency resource used for the signal.

11. A communication method, comprising:

    determining, by a terminal, one combination from a plurality of combinations according to a value of an information bit in an uplink transmission without using a reference signal, each of the plurality of combinations being a combination of a sequence and a frequency resource; and
    transmitting, by the terminal, the sequence included in the one combination by using the frequency resource included in the one combination.

12. A communication method, comprising:

    receiving, by a base station, a signal; and
    identifying, by the base station, based on an association of a value of an information bit with a combination of a sequence and a frequency resource in an uplink transmission without using a reference signal, the value of the information bit corresponding to a sequence included in a signal and a frequency resource used for the signal.

|  | PUCCH format 0 | PUCCH format 1 | PUCCH format 2 | PUCCH format 3 | PUCCH format 4 |
|---|---|---|---|---|---|
| Use case | Short PUCCH HARQ/SR 1 - 2 bits | Long PUCCH HARQ/SR 1 - 2 bits | Short PUCCH Any UCI >2 bits | Long PUCCH Any UCI >2 bits | Long PUCCH Any UCI >2 bits |
| Duration | 1-2 symbols | 4-14 symbols | 1-2 symbols | 4-14 symbols | 4-14 symbols |
| Starting symbol | Anywhere unless the PUCCH cross slot boundary | | | | |
| RB size | 1 RB | 1 RB | 1-16 RBs | 1-16 RBs | 1 RB |
| CDM capacity | 6 (1 bit) 3 (2 bits) | 36 (14 symbols with frequency hopping) 84 (14 symbols without frequency hopping) | 1 | 1 | 2 or 4 |
| Multiplexing | Cyclic shift | Cyclic shift + TD-OCC | - | - | FD-OCC |
| Coding scheme | - | - | Reed-Muller (up to 11 bits) Polar (>11 bits) | | |
| Waveform | Singe-carrier | Singe-carrier | CP-OFDM | Singe-carrier | Singe-carrier |

FIG. 1

Sequence pool (N-bit UCI)

| Sequence #0 |
| Sequence #1 |
| Sequence #2 |
| $\vdots$ |
| Sequence #$2^N - 1$ |

UCI information (N bits) $\Rightarrow$ → $\Rightarrow$ Sequence #n $\Rightarrow$

$N_{symb}$ OFDM symbols

$N_{RB}$ RBs

Map to PUCCH resource

FIG. 2

FIG. 3

| N=3 bits | | | N=11 bits | | |
|---|---|---|---|---|---|
| $N_{symb}$ | $N_O$ | $N_{NO}$ | $N_{symb}$ | $N_O$ | $N_{NO}$ |
| 4 | 48 | 0 | 4 | 48 | 43 |
| 5 | 60 | 0 | 5 | 60 | 35 |
| 6 | 72 | 0 | 6 | 72 | 29 |
| 7 | 84 | 0 | 7 | 84 | 25 |
| 8 | 96 | 0 | 8 | 96 | 22 |
| 9 | 108 | 0 | 9 | 108 | 19 |
| 10 | 120 | 0 | 10 | 120 | 18 |
| 11 | 132 | 0 | 11 | 132 | 16 |
| 12 | 144 | 0 | 12 | 144 | 15 |
| 13 | 156 | 0 | 13 | 156 | 14 |
| 14 | 168 | 0 | 14 | 168 | 13 |

FIG. 4

100

| CONTROLLER | → | RECEIVER |

## FIG. 5

200

| CONTROLLER | → | TRANSMITTER |

## FIG. 6

FIG. 7

FIG. 8

```
              ┌─────────────┐
              │    Start    │
              └──────┬──────┘
                     │
                     ▼
┌──────────────────────────────────────────────────┐
│ ACQUIRE INFORMATION ON SEQUENCE POOL AND PUCCH RESOURCE │  S101
└──────────────────────┬───────────────────────────┘
                       │
                       ▼
         ┌───────────────────────────┐
         │     RECEIVE PDCCH (DCI)    │  S102
         └─────────────┬─────────────┘
                       │
                       ▼
         ┌───────────────────────────┐
         │   RECEIVE AND DECODE PDSCH │  S103
         └─────────────┬─────────────┘
                       │
                       ▼
         ┌───────────────────────────┐
         │   GENERATE UCI (ACK/NACK)  │  S104
         └─────────────┬─────────────┘
                       │
                       ▼
      ┌──────────────────────────────────┐
      │    SELECT COMBINATION OF SEQUENCE │  S105
      │       AND FREQUENCY RESOURCE      │
      └─────────────────┬────────────────┘
                        │
                        ▼
      ┌───────────────────────────────────────┐
      │        MAP SELECTED SEQUENCE TO        │  S106
      │ SELECTED FREQUENCY RESOURCE IN PUCCH RESOURCE │
      └─────────────────┬─────────────────────┘
                        │
                        ▼
         ┌───────────────────────────┐
         │   TRANSMIT UCI WITH PUCCH  │  S107
         └─────────────┬─────────────┘
                       │
                       ▼
              ┌─────────────┐
              │     End     │
              └─────────────┘
```

FIG. 9

EP 4 503 483 A1

Sequence pool (N-bit UCI)

$N_{symb}$ OFDM symbols

| Sequence #0 |
| Sequence #1 |
| Sequence #2 |
| $\vdots$ |
| Sequence #$N_0$-1 |

UCI information
(N bits)

Sequence #n

RB index #m

M RBs

Map to PUCCH resource

FIG. 10

| ORTHOGONAL SEQUENCE NUMBER | Cyclic shift | OCC index |
|---|---|---|
| #0 | 0 | 0 |
| #1 | 1 | 0 |
| #2 | 2 | 0 |
| ... | ... | 0 |
| #11 | 11 | 0 |
| #12 | 0 | 1 |
| ... | ... | 1 |
| #23 | 11 | 1 |
| ... | ... | ... |
| #72 ... #83 | #0 ... #1 | 6 |
| #84 ... #95 | #0 ... #1 | 7 |
| ... | ... | ... |
| #156 ... #167 | #0 ... #1 | 13 |

| UCI BIT SEQUENCE | ORTHOGONAL SEQUENCE NUMBER | RB index |
|---|---|---|
| 00000000000 | #0 | 0 |
| 00000000001 | #1 | 0 |
| ... | ... | 0 |
| 00010100111 | #167 | 0 |
| 00010101000 | #0 | 1 |
| 00010101001 | #1 | 1 |
| ... | ... | 1 |
| 00101001111 | #167 | 1 |
| ... | ... | ... |
| 11111111111 | #31 | 11 |

FIG. 11

FIG. 12

EP 4 503 483 A1

| ORTHOGONAL SEQUENCE NUMBER | Cyclic shift | OCC index |
|---|---|---|
| #0 | 0 | 0 |
| #1 | 1 | 0 |
| #2 | 2 | 0 |
| ... | ... | 0 |
| #11 | 11 | 0 |
| #12 | 0 | 1 |
| ... | ... | 1 |
| #23 | 11 | 1 |
| ... | ... | ... |
| #72 ... #83 | #0 ... #1 | 6 |
| #84 ... #95 | #0 ... #1 | 7 |
| ... | ... | ... |
| #156 ... #167 | #0 ... #1 | 13 |

| UCI BIT SEQUENCE | ORTHOGONAL SEQUENCE NUMBER | comb-index |
|---|---|---|
| 00000000 | #0 | 0 |
| 00000000 | #1 | 0 |
| ... | ... | 0 |
| 10100111 | #167 | 0 |
| 10101000 | #0 | 1 |
| 10101001 | #1 | 1 |
| ... | ... | 1 |
| 11111111 | #79 | 1 |

FIG. 13

EP 4 503 483 A1

| $N_{symb}$ | $N_O$ | M or K | $N_{NO}$ |
|---|---|---|---|
| 4 | 48 | 16 | 3 |
| 5 | 60 | 16 | 3 |
| 6 | 72 | 16 | 2 |
| 7 | 84 | 16 | 2 |
| 8 | 96 | 16 | 2 |
| 9 | 108 | 16 | 2 |
| 10 | 120 | 16 | 2 |
| 11 | 132 | 16 | – |
| 12 | 144 | 16 | – |
| 13 | 156 | 16 | – |
| 14 | 168 | 16 | – |

FIG. 14

FIG. 15

gNB or ng - eNB

Inter Cell RRM

RB Control

Connection Mobility Cont.

Radio Admission Control

Measurement
Configuration & Provision

Dynamic Resource
Allocation (Scheduler)

NG - RAN

AMF

NAS Security

Idle State Mobility
Handling

UPF

Mobility Anchoring

PDU Handling

SMF

UE IP address
allocation

PDU Session
Control

internet

5 GC

FIG. 16

FIG. 17

**Enhanced Mobile Broadband**

Gigabytes in a second

3D video, UHD screens

Work and play in the cloud

Smart Home/Building

Augmented reality

Mission critical application e.g. e-health

Smart City

Industry automation

Self Driving Car

**Massive Machine Type Communication**

**Ultra-reliable and Low Latency Communication**

FIG. 18

FIG. 19

| INTERNATIONAL SEARCH REPORT | International application No. |
|---|---|
| | **PCT/JP2022/048548** |

**A. CLASSIFICATION OF SUBJECT MATTER**

*H04J 13/10*(2011.01)i; *H04L 27/26*(2006.01)i; *H04W 72/02*(2009.01)i; *H04W 72/0453*(2023.01)i
FI: H04J13/10; H04W72/0453; H04W72/02; H04L27/26 113

According to International Patent Classification (IPC) or to both national classification and IPC

**B. FIELDS SEARCHED**

Minimum documentation searched (classification system followed by classification symbols)

H04J13/10; H04L27/26; H04W72/02; H04W72/0453

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2021/0092734 A1 (QUALCOMM INCORPORATED) 25 March 2021 (2021-03-25) | 1-2, 5, 9-12 |
| | paragraphs [0071]-[0074], [0127]-[0129], [0163], fig. 3B | |
| Y | | 3-4 |
| A | | 6-8 |
| X | QUALCOMM INCORPORATED. Potential coverage enhancement techniques for PUCCH [online]. 3GPP TSG RAN WG1 #103-e R1-2009315 | 1-2, 5, 9-12 |
| | section 2.1, fig. 2 | |
| Y | | 3-4 |
| A | | 6-8 |
| Y | JP 2020-504491 A (TELEFONAKTIEBOLAGET LM ERICSSON (PUBL)) 06 February 2020 (2020-02-06) | 3-4 |
| | paragraph [0028], fig. 2 | |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 February 2023** | **21 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/048548**

| Patent document cited in search report | | | Publication date (day/month/year) | Patent family member(s) | | | Publication date (day/month/year) |
|---|---|---|---|---|---|---|---|
| US | 2021/0092734 | A1 | 25 March 2021 | WO 2021/061726 A1 paragraphs [0071]-[0074], [0126]-[0128], fig. 3B | | | |
| | | | | CN | 114503730 | A | |
| | | | | KR 10-2022-0066062 | | A | |
| JP | 2020-504491 | A | 06 February 2020 | US 2020/0077424 A1 paragraph [0041], fig. 2 | | | |
| | | | | WO | 2018/128574 | A1 | |
| | | | | CN | 108541362 | A | |
| | | | | TW | 201831016 | A | |

Form PCT/ISA/210 (patent family annex) (January 2015)

44

**REFERENCES CITED IN THE DESCRIPTION**

**Patent documents cited in the description**

- JP 2022049014 A

**Non-patent literature cited in the description**

- NR Base Station (BS) radio transmission and reception (Release 15). *3GPP TS38.104 V15.16.0*, December 2021
- New WID on NR coverage enhancements. *RP-202928*, December 2020
- NR Physical channels and modulation (Release 16). *3GPP TS38.211 V16.8.0*, December 2021
- NR Multiplexing and channel coding (Release 16). *3GPP TS38.212 V16.8.0*, December 2021
- NR Physical layer procedures for control (Release 16). *3GPP TS38.213 V16.8.0*, December 2021
- NR Physical layer procedures for data (Release 16). *3GPP TS38.214 V16.8.0*, December 2021
- **HUAWEI** ; **HISILICON**. Potential solutions for PUCCH coverage enhancement. *R1-2007584*, 26 October 2020
- **QUALCOMM INCORPORATED** ; **HUAWEI** ; **HISILICON**. Potential coverage enhancement techniques for PUCCH. *R1-2009315*, 26 October 2020